(19) Europäisches Patentamt
European Patent Office
Office européen des brevets

(11) **EP 4 593 498 A1**

(12) **EUROPEAN PATENT APPLICATION**
published in accordance with Art. 153(4) EPC

(43) Date of publication:
**30.07.2025 Bulletin 2025/31**

(21) Application number: **23854376.3**

(22) Date of filing: **12.08.2023**

(51) International Patent Classification (IPC):
**H04W 72/21** (2023.01)

(52) Cooperative Patent Classification (CPC):
**H04W 72/0446; H04W 72/20; H04W 72/21**

(86) International application number:
**PCT/CN2023/112782**

(87) International publication number:
**WO 2024/037475 (22.02.2024 Gazette 2024/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.08.2022 CN 202211003230**
**07.09.2022 CN 202211090621**

(71) Applicant: **SHANGHAI LANGBO COMMUNICATION TECHNOLOGY COMPANY LIMITED**
**Shanghai 200240 (CN)**

(72) Inventors:
• **WU, Keying**
**Shanghai 201206 (CN)**
• **WANG, Ping**
**Shanghai 201206 (CN)**
• **ZHANG, Xiaobo**
**Shanghai 201206 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **METHOD AND APPARATUS USED IN NODE FOR WIRELESS COMMUNICATION**

(57) Disclosed in the present application are a method and apparatus used in a node for wireless communication. The method comprises: a first node receiving a first information block and first signaling, wherein the first information block is used for determining a first time-domain resource, and the first signaling is used for determining a first time window set, the first time window set comprising K time windows, and K being a positive integer greater than 1; and respectively sending K signals in the K time windows, wherein each of the K signals carries a TB, a first signal among the K signals carries a first bit block, and the first bit block comprises UCI; the K time windows are divided into a first time window subset and a second time window subset, and each time window in the second time window subset overlaps with the first time-domain resource; and a signal, which is only sent in the first time window subset, among the K signals is used for carrying the first bit block. The method increases the resource utilization rate, and ensures the transmission reliability of UCI.

FIG. 1

## Description

## Technical Field

The present application relates to transmission methods and apparatuses in wireless communication systems, in particular to transmission methods and apparatuses for wireless signals in wireless communication systems supporting cellular networks.

## Background Art

In the existing NR (New Radio) system, the spectrum resources are statically divided into FDD (Frequency Division Duplexing) spectra and TDD (Time Division Duplexing) spectra. For the TDD spectra, both a base station and UE (User Equipment) operate in half-duplex mode. Such a half-duplex mode avoids self-interference and can mitigate the impact of cross-link interference, but also results in the decrease of resource utilization rate and the increase of latency. To address these problems, supporting flexible duplex modes or variable link directions (uplink or downlink or flexible) on the TDD spectra or FDD spectra becomes a possible solution. In the 3GPP (3rd Generation Partner Project) RAN (Radio Access Network) #88e meeting and the 3GPP R-18 workshop, supporting more flexible duplex modes or full duplex modes in NR R-18 has received widespread attention and discussion, especially the subband non-overlapping full duplex (SBFD) mode at the gNB (NR Node B) end. Communications in this mode will suffer from serious interference, including self-interference and cross-link interference. To solve the interference problem, advanced interference cancellation technologies need to be adopted, including antenna isolation, beamforming, RF (Radio Frequency)-level interference cancellation, and digital interference cancellation.

## Summary of the Invention

In the NR system, UCI (Uplink control information) can be transmitted on PUSCH (Physical uplink shared channel). In the SBFD scenario, spectrum assignment for uplink and downlink transmission will become more flexible and the interference situation will become more complex. Through researches, the inventors found that in this scenario, existing transmission schemes need to be reconsidered.

In response to the above-mentioned problems, the present application discloses a solution. It should be noted that although the above description uses SBFD scenarios as examples, other non-SBFD scenarios can be applied to the present application. Further, the use of a unified design scheme for different scenarios (including but not limited to the SBFD scenario and other non-SBFD scenarios) will also help reduce hardware complexity and costs. In case of no conflict, the embodiments and features in the embodiments in any node of the present application can be applied to any other node. In the case of no conflict, the embodiments and the features in the embodiments in the present application can be arbitrarily combined with each other.

As one embodiment, the explanation of the terminology in the present application refers to the definitions in the TS36 series of the specification protocol of 3GPP.

As one embodiment, the explanation of the terminology in the present application refers to the definitions in the TS38 series of the specification protocol of 3GPP.

As one embodiment, the explanation of the terminology in the present application refers to the definitions in the TS37 series of the specification protocol of 3GPP.

As one embodiment, the explanation of the terminology in the present application refers to the definitions in the specification protocol of IEEE (Institute of Electrical and Electronics Engineers).

The present application discloses a method for use in a first node for wireless communication, comprising:

receiving a first information block and a first signaling, wherein the first information block is used for determining a first time domain resource, and the first signaling is used for determining a first time window set, the first time window set comprising K time windows, and K being a positive integer greater than 1;

respectively sending K signals in the K time windows;

wherein each signal of the K signals carries one TB; a first signal among the K signals carries a first bit block, and the first bit block comprises UCI; the K time windows are divided into a first time window subset and a second time window subset, and each time window in the second time window subset overlaps with the first time domain resource; a signal, which is only sent in the first time window subset, among the K signals is used for carrying the first bit block.

As one embodiment, the benefits of the above-mentioned method comprise: optimizing resource assignment and increasing resource utilization rate.

As one embodiment, the benefits of the above-mentioned method comprise: ensuring transmission reliability of UCI.

As one embodiment, the benefits of the above-mentioned method comprise: having good compatibility.

As one embodiment, the benefits of the above-mentioned method comprise: improving system performance in case of smaller changes to the current system.

Specifically, according to one aspect of the present application, the above-mentioned method is characterized in that the first information block configures symbols in the first time domain resource as a first type.

As one embodiment, the benefits of the above-mentioned method comprise: saving signaling overhead.

Specifically, according to one aspect of the present application, the above-mentioned method is characterized in that the first bit block comprises a first CSI, and the first signaling is used for triggering the first CSI.

As one embodiment, the benefits of the above-mentioned method comprise: increasing reliability of CSI reporting.

Specifically, according to one aspect of the present application, the above-mentioned method is characterized in that it comprises:

receiving a second signaling;
wherein the second signaling is used for determining the first bit block and a reference time window, and the reference time window overlaps with each time window in the K time windows.

Specifically, according to one aspect of the present application, the above-mentioned method is characterized in that the second signaling is used for determining configuration information of a second signal, and the second signal is used for determining the first bit block.

Specifically, according to one aspect of the present application, the above-mentioned method is characterized in that the first signal is sent in a first time window in the K time windows, and a position of the first time window in the first time window subset is default.

Specifically, according to one aspect of the present application, the above-mentioned method is characterized in that the position of the first time window in the first time window subset depends on whether the K signals correspond to a same HARQ process number.

According to one aspect of the present application, the first node is user equipment.

According to one aspect of the present application, the first node is a relay node.

The present application discloses a method for use in a second node for wireless communication, comprising:

sending a first information block and a first signaling, wherein the first information block is used for determining a first time domain resource, and the first signaling is used for determining a first time window set, the first time window set comprising K time windows, and K being a positive integer greater than 1;
respectively receiving K signals in the K time windows;
wherein each signal of the K signals carries one TB; a first signal among the K signals carries a first bit block, and the first bit block comprises UCI; the K time windows are divided into a first time window subset and a second time window subset, and each time window in the second time window subset overlaps with the first time domain resource; a signal, which is only sent in the first time window subset, among the K signals is used for carrying the first bit block.

Specifically, according to one aspect of the present application, the above-mentioned method is characterized in that the first information block configures symbols in the first time domain resource as a first type.

Specifically, according to one aspect of the present application, the above-mentioned method is characterized in that the first bit block comprises a first CSI, and the first signaling is used for triggering the first CSI.

Specifically, according to one aspect of the present application, the above-mentioned method is characterized in that it comprises:

sending a second signaling;
wherein the second signaling is used for determining the first bit block and a reference time window, and the reference time window overlaps with each time window in the K time windows.

Specifically, according to one aspect of the present application, the above-mentioned method is characterized in that the second signaling is used for determining configuration information of a second signal, and the second signal is used for determining the first bit block.

Specifically, according to one aspect of the present application, the above-mentioned method is characterized in that the first signal is sent in a first time window in the K time windows, and a position of the first time window in the first time window subset is default.

Specifically, according to one aspect of the present application, the above-mentioned method is characterized in that the position of the first time window in the first time window subset depends on whether the K signals correspond to a same HARQ process number.

According to one aspect of the present application, the second node is a base station.

According to one aspect of the present application, the second node is user equipment.

According to one aspect of the present application, the second node is a relay node.

The present application discloses a first node for wireless communication, comprising:

a first receiver for receiving a first information block and a first signaling, wherein the first information block is used for determining a first time domain resource, and the first signaling is used for determining a first time window set, the first time window set comprising K time windows, and K being a positive integer greater than 1;

a first transmitter for respectively sending K signals in the K time windows;

wherein each signal of the K signals carries one TB; a first signal among the K signals carries a first bit block, and the first bit block comprises UCI; the K time windows are divided into a first time window subset and a second time window subset, and each time window in the second time window subset overlaps with the first time domain resource; a signal, which is only sent in the first time window subset, among the K signals is used for carrying the first bit block.

The present application discloses a second node for wireless communication, comprising:

a second transmitter for sending a first information block and a first signaling, wherein the first information block is used for determining a first time domain resource, and the first signaling is used for determining a first time window set, the first time window set comprising K time windows, and K being a positive integer greater than 1;

a second receiver for respectively receiving K signals in the K time windows;

wherein each signal of the K signals carries one TB; a first signal among the K signals carries a first bit block, and the first bit block comprises UCI; the K time windows are divided into a first time window subset and a second time window subset, and each time window in the second time window subset overlaps with the first time domain resource; a signal, which is only sent in the first time window subset, among the K signals is used for carrying the first bit block.

As one embodiment, compared with the traditional solution, the present application has the following advantages:

resource utilization rate is increased;
transmission reliability of UCI is ensured;
system performance is improved;
resource assignment is optimized.

## Brief Description of the Drawings

Other features, objects and advantages of the present application will become more apparent by reading the detailed description of non-limiting embodiments with reference to the following drawings:

FIG. 1 shows a flowchart of a first information block, a first signaling and K signals according to one embodiment of the present application;
FIG. 2 shows a schematic diagram of a network architecture according to one embodiment of the present application;

FIG. 3 shows a schematic diagram of an embodiment of a wireless protocol architecture of a user plane and a control plane according to one embodiment of the present application;
FIG. 4 shows a schematic diagram of a first communication device and a second communication device according to one embodiment of the present application;
FIG. 5 shows transmission between a first node and a second node according to one embodiment of the present application;
FIG. 6 shows a schematic diagram of configuring symbols in a first time domain resource as a first type by a first information block according to one embodiment of the present application;
FIG. 7 shows a schematic diagram of a first information block being used for determining a second time domain resource according to one embodiment of the present application;
FIG. 8 shows a schematic diagram of relationships among a first bit block, a first CSI and a first signaling according to one embodiment of the present application;
FIG. 9 shows a schematic diagram of relationships among a first bit block, a second signal and a second signaling according to one embodiment of the present application;
FIG. 10 shows a schematic diagram of a first signal being sent in a first time window in K time windows according to one embodiment of the present application;
FIG. 11 shows a schematic diagram where a position of a first time window in a first time subset depends on whether K signals correspond to a same HARQ process number according to one embodiment of the present application;
FIG. 12 shows a structural block diagram of a processing apparatus for a first node according to one embodiment of the present application;
FIG. 13 shows a structural block diagram of a processing apparatus for a second node according to one embodiment of the present application.

## Detailed Description of Embodiments

The technical solution of the present application will be further described in detail below in conjunction with drawings. It should be noted that the embodiments and features in the embodiments in the present application can be arbitrarily combined with each other in case of no conflict.

## Embodiment 1

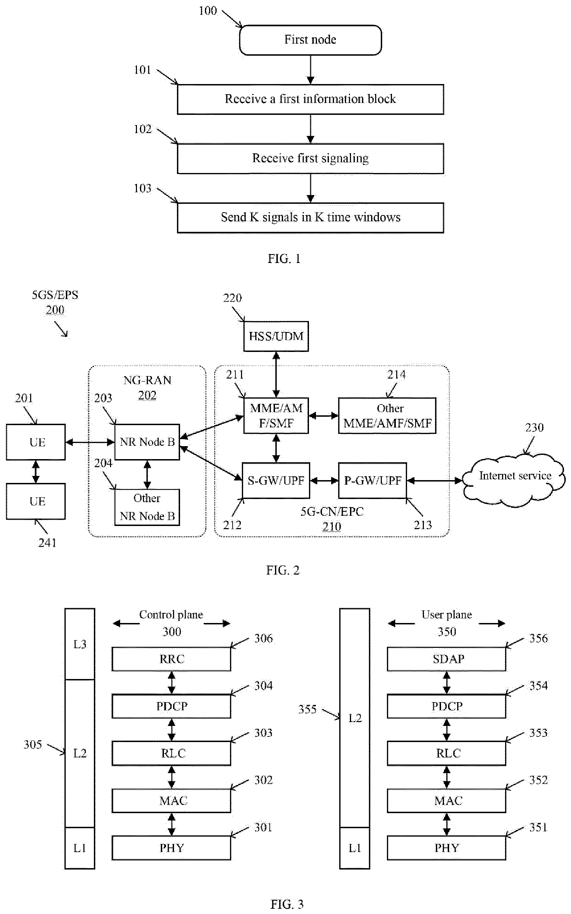

Embodiment 1 illustrates a flowchart of a first information block, a first signaling and K signals according to one embodiment of the present application, as shown in FIG. 1. In FIG. 1, each block represents one step. In particular, the order of steps in the block does not represent a specific temporal sequence between various steps.

In step 101, a first node 100 receives a first information block, the first information block being used for determining a first time domain resource; in step 102, the first node 100 receives a first signaling, and the first signaling is used for determining a first time window set, the first time window set comprising K time windows, and K being a positive integer greater than 1; in step 103, the first node 100 sends K signals respectively in the K time windows.

In Embodiment 1, each signal of the K signals carries one TB; a first signal among the K signals carries a first bit block, and the first bit block comprises UCI; the K time windows are divided into a first time window subset and a second time window subset, and each time window in the second time window subset overlaps with the first resource; a signal in the K signals sent only in the first time window subset is used for carrying the first bit block.

As one embodiment, the TB refers to: Transport Block.

As one embodiment, the UCI refers to: Uplink control information.

As one embodiment, the first information block is carried by a higher layer signaling.

As one embodiment, the first information block is carried by RRC (Radio Resource Control) signaling.

As one embodiment, the first information block comprises information in all or part of fields of RRC IE (Information Element).

As one embodiment, the first information block comprises information in all or part of fields of a *TDD-UL-DL-ConfigCommon* IE.

As one embodiment, the first information block comprises information in all or part of fields of a *TDD-UL-DL-ConfigDedicated* IE.

As one embodiment, the first information block is carried by one RRC IE.

As one sub-embodiment of the above-mentioned embodiments, a name of IE carrying the first information block comprises *"TDD-UL-DL-Config"*.

As one sub-embodiment of the above-mentioned embodiments, a name of IE carrying the first information block comprises *"ServingCellConfig"*.

As one embodiment, the first information block is carried by *TDD-UL-DL-ConfigCommon* IE.

As one embodiment, the first information block is carried by *TDD-UL-DL-ConfigDedicated* IE.

As one embodiment, the first information block is carried by *ServingCellConfig* IE.

As one embodiment, the first information block is carried by *ServingCellConfigCommon* IE.

As one embodiment, the first information block is carried by *ServingCellConfigCommonSIB* IE.

As one embodiment, the first information block is carried by a MAC CE (Medium Access Control layer Control Element).

As one embodiment, the first information block is carried by a physical layer signaling.

As one embodiment, the first information block is carried by DCI (Downlink control information).

As one embodiment, the first information block comprises information in one or more fields of one DCI.

As one embodiment, the first information block is carried by DCI format 2_0.

As one embodiment, the first signaling comprises a physical layer signaling.

As one embodiment, the first signaling comprises a dynamic signaling.

As one embodiment, the first signaling comprises a Layer 1 (L1) signaling.

As one embodiment, the first signaling comprises DCI.

As one embodiment, the first signaling is one DCI.

As one embodiment, the first signaling comprises one or more DCI fields of one DCI.

As one embodiment, a format of the first signaling is one of format 0_0, format 0_1 or format 0_2.

As one embodiment, the first signaling comprises an RRC signaling.

As one embodiment, the first signaling comprises MAC CE.

As one embodiment, any time window in the first time window set comprises at least one symbol.

As one embodiment, any time window in the first time window set comprises one or more consecutive symbols.

As one embodiment, any time window in the first time window set consists of one or more consecutive symbols.

As one embodiment, the symbol comprises an OFDM (Orthogonal Frequency Division Multiplexing) symbol.

As one embodiment, the symbol comprises a DFT-S-OFDM (Discrete Fourier Transform Spread OFDM) symbol.

As one embodiment, the symbol is obtained after the output of the transform precoding undergoes the OFDM symbol generation.

As one embodiment, any two time windows in the first time window set are orthogonal to each other in time domain.

As one embodiment, the first time window set comprises the K time windows.

As one embodiment, the first time window set comprises at least one time window not belonging to the K time windows.

As one embodiment, the K time windows are respectively assigned to K repetition transmissions of one TB scheduled by the first signaling.

As one embodiment, the K time windows are respectively assigned to K PUSCHs (Physical uplink shared channel) scheduled by the first signaling.

As one embodiment, any time window in the first time window set is assigned to one repetition transmission of one TB scheduled by the first signaling.

As one embodiment, any time window in the first time window set is assigned to PUSCH scheduled by the first signaling.

As one embodiment, the first time window set comprises K0 time windows, where K0 is a positive integer not less than K, and any time window in the K time windows is one of the K0 time windows.

As one embodiment, the K0 time windows occupy K0 different slots respectively.

As one embodiment, the K0 time windows occupy K0 consecutive slots respectively.

As one embodiment, among the K0 time windows, there exist two adjacent time windows occupying 2 non-consecutive slots.

As one embodiment, among the K0 time windows, there exist two time windows occupying the same slot.

As one embodiment, the K0 is equal to the K.

As one embodiment, the K0 is greater than the K.

As one embodiment, the first time window set comprises the K0 time windows.

As one embodiment, all time windows in the first time window set are consecutive in time domain.

As one embodiment, there exist at least two adjacent time windows that are non-consecutive in time domain in the first time window set.

As one embodiment, any time window in the first time window set is one actual repetition.

As one embodiment, the K signals all carry a second bit block, the second bit block comprising one TB.

As one sub-embodiment of the above-mentioned embodiments, any time window in the first time window set is used for one repetition transmission of the second bit block.

As one sub-embodiment of the above-mentioned embodiments, any time window in the first time window set is used for one actual repetition transmission of the second bit block.

As one sub-embodiment of the above-mentioned embodiments, the K signals are K repetition transmissions of the second bit block, respectively.

As one sub-embodiment of the above-mentioned embodiments, the K time windows are respectively assigned to K repetition transmissions of the second bit block.

As one embodiment, the K signals respectively carry K bit blocks; any bit block in the K bit blocks comprises one TB.

As one sub-embodiment of the above-mentioned embodiments, the K time windows are respectively assigned to the K bit blocks.

As one sub-embodiment of the above-mentioned embodiments, the K bit blocks respectively comprise K TBs.

As one embodiment, the first time window subset comprises only one time window in the K time windows.

As one embodiment, the first time window subset comprises a plurality of time windows in the K time windows.

As one embodiment, the second time window subset comprises only one time window in the K time windows.

As one embodiment, the second time window subset comprises a plurality of time windows in the K time windows.

As one embodiment, the first time window subset and the second time window subset are orthogonal to each other in time domain.

As one embodiment, any two time windows of the K time windows are orthogonal to each other in time domain.

As one embodiment, the K time windows comprises the first time window subset and the second time window subset.

As one embodiment, any time window in the K time windows belongs to one of the first time window subset or the second time window subset.

As one embodiment, there is no time window in the K time windows that belongs to the first time window subset and the second time window subset at the same time.

As one embodiment, each time window in the second time window subset belongs to the first time domain resource.

As one embodiment, any symbol in any time window in the second time window subset belongs to the first time domain resource.

As one embodiment, at least one symbol in any time window in the second time window subset belongs to the first time domain resource.

As one embodiment, in the second time window subset, there exists a time window where partial symbols do not belong to the first time domain resource.

As one embodiment, at least one symbol in any time window in the second time window subset is simultaneously used for both uplink transmission and downlink transmission.

As one embodiment, at least one symbol in any time window in the second time window subset is simultaneously used for both uplink transmission and downlink transmission by a sender of the first signaling.

As one embodiment, a sender of the first signaling simultaneously receives and sends wireless signals in at least one symbol in any time window in the second time window subset.

As one embodiment, a sender of the first signaling simultaneously receives and sends wireless signals in at least one symbol in any time window in the second time window subset within a cell where the K signals are located.

As one embodiment, any symbol in any time window in the second time window subset is simultaneously used for both uplink transmission and downlink transmission by a sender of the first signaling.

As one embodiment, a sender of the first signaling simultaneously receives and sends wireless signals in any symbol in any time window in the second time window subset.

As one embodiment, each time window in the first time window subset and the first time domain resource are orthogonal to each other.

As one embodiment, any symbol in any time window in the first time window subset does not belong to the first time domain resource.

As one embodiment, at least one symbol in any time window in the first time window subset does not belong to the first time domain resource.

As one embodiment, any symbol in any time window in the first time window subset is used only for uplink transmission.

As one embodiment, any symbol in any time window in the first time window subset is used only for uplink transmission by a sender of the first signaling.

As one embodiment, a sender of the first signaling receives wireless signals only in any symbol in any time window in the first time window subset.

As one embodiment, a sender of the first signaling receives wireless signals only in any symbol in any time window in the first time window subset within a cell where the K signals are located.

As one embodiment, at least one symbol in any time window in the first time window subset is used only for uplink transmission by a sender of the first signaling.

As one embodiment, a sender of the first signaling receives wireless signals only in at least one symbol in any time window in the first time window subset.

As one embodiment, the first node is configured with a higher layer parameter *"pusch-AggregationFactor"*.

As one embodiment, the first node is configured with a higher layer parameter *"pusch-AggregationFactor"* in *PUSCH-Config* IE.

As one embodiment, the first node is configured with a higher layer parameter *"numberOfRepetitions"*.

As one embodiment, the first node is configured with a higher level parameter *"numberOfRepetitions"* in *PUSCH-TimeDomainResourceAllocationList*.

As one embodiment, a resource assignment table of the first node comprises *"numberOfRepetitions"*.

As one sub-embodiment of the above-mentioned embodiments, at least one entry of the resource assignment table comprises *"numberOfRepetitions"*.

As one embodiment, the first node is configured with one of a higher level parameter *"pusch-AggregationFactor"* or *"numberOfRepetitions",* and the K signals all carry the second bit block.

As one embodiment, the K signals all carry the second bit block; any time window in the first time window set is one actual repetition. As one embodiment, the K signals all carry the second bit block, and the K signals correspond to a same HARQ process number.

As one embodiment, the K signals correspond to a same HARQ process number.

As one embodiment, the K signals are respectively K PUSCH transmissions scheduled by the first signaling.

As one embodiment, the first node is configured with a higher layer parameter *"pdsch-TimeDomainAllocationListForMultiPDSCH".*

As one embodiment, the first node is configured with a higher layer parameter *"pdsch-TimeDomainAllocationListForMultiPDSCH"* in *PDSCH-Config* IE.

As one embodiment, at least one entry in *"pdsch-TimeDomainAllocationListForMultiPDSCH"* configured to the first node comprises a plurality of SLIVs (Start and Length Indicator Value).

As one embodiment, the K signals respectively carry the K bit blocks, and the first node is configured with a higher layer parameter *"pdsch-TimeDomainAllocationListForMultiPDSCH".*

As one embodiment, the K signals respectively carry the K bit blocks, the first node is configured with a higher level parameter *"pdsch-TimeDomainAllocationListForMultiPDSCH",* and at least one entry in *"pdsch-TimeDomainAllocationListForMultiPDSCH"* configured to the first node comprises a plurality of SLIVs.

As one embodiment, at least one entry in a resource assignment table of the first node comprises a plurality of SLIVs.

As one embodiment, the K signals respectively carry the K bit blocks, and the K signals respectively correspond to K different HARQ process numbers.

As one embodiment, the K signals respectively correspond to K different HARQ process numbers.

As one embodiment, the resource assignment table is a PUSCH time domain resource assignment table.

As one embodiment, the resource assignment table is configured by *PUSCH-TimeDomainResourceAllocationList.*

As one embodiment, the resource assignment table is configured by a first field in *PUSCH-Config* IE, and a name of the first field comprises *"pusch-TimeDomainAllocationList".*

As one sub-embodiment of the above-mentioned embodiments, the first field is a *"pusch-TimeDomainAllocationList"* field.

As one sub-embodiment of the above-mentioned embodiments, the first field is one of a *"pusch-TimeDomainAllocationList"* field, a *"pusch-TimeDomainAllocationListDCI-0-2-r16"* field, a *"pusch-TimeDomainAllocationListDCI-0-1-r16"* field, a *"pusch-TimeDomainAllocationListForMultiPUSCH-r16"* field, or a *"pusch-TimeDomainAllocationListForMultiPUSCH-r17"* field.

As one embodiment, the first signaling indicates a second time window set, and the second time window set comprises at least one time window; the second time window set is used for determining the first time window set.

As one sub-embodiment of the above-mentioned embodiments, any time window in the first time window set is one actual repetition.

As one sub-embodiment of the above-mentioned embodiments, any time window in the second time window set is one nominal repetition.

As one sub-embodiment of the above-mentioned embodiments, any time window in the first time window set is used for an actual repetition.

As one sub-embodiment of the above-mentioned embodiments, any time window in the second set of time window set is used for a nominal repetition.

As one sub-embodiment of the above-mentioned embodiments, any two time windows in the first time window set are two actual repetitions respectively.

As one sub-embodiment of the above-mentioned embodiments, any two time windows in the second time window set are two nominal repetitions respectively.

As one sub-embodiment of the above-mentioned embodiments, after determining invalid symbols, remaining symbols in each nominal repetition are potentially valid symbols; for any nominal repetition, if the number of potentially valid symbols in the any nominal repetition is greater than 0, the any nominal repetition comprises one or more actual repetitions; any actual repetition in the one or a plurality of actual repetitions comprises a group of consecutive potentially valid symbols in all potentially valid symbols in one slot.

As one reference embodiment of the above-mentioned sub-embodiments, the invalid symbols are symbols invalid for PUSCH repetition Type B transmission, and the potentially valid symbols are symbols potentially valid for PUSCH repetition Type B transmission.

As one sub-embodiment of the above-mentioned embodiments, the first time window set does not comprise actual repetitions with a symbol count of 1.

As one sub-embodiment of the above-mentioned embodiments, the K signals all carry the second bit block, and the K signals are respectively K repetition transmissions of the second bit block.

As one embodiment, the first signaling is one DCI, and a DCI field time domain resource assignment in the first signaling is used for determining the first time window set.

As one embodiment, the first signaling is one DCI, and a DCI field time domain resource assignment in the first signaling indicates the first time window set.

As one embodiment, the first signaling is one DCI, and a DCI field time domain resource assignment in the first signaling indicates the second time window set.

As one embodiment, the first signaling indicates the number of time windows comprised in the first time window set.

As one embodiment, the number of time windows comprised in the first time window set is configured by a higher layer signaling.

As one embodiment, the first signaling indicates the number of time windows comprised in the second time window set.

As one embodiment, the first signaling indicates one entry in a resource assignment table, and the entry is used for determining a first slot offset, a first start symbol and a first length; the first slot offset, the first start symbol and the first length are jointly used for determining the first time window set; the first slot offset and the first start symbol are non-negative integers, and the first length is a positive integer.

As one sub-embodiment of the above-mentioned embodiments, the first signaling is one DCI, and a DCI field time domain resource assignment in the first signaling indicates the entry.

As one sub-embodiment of the above-mentioned embodiments, the first slot offset and $n_1$ are jointly used for determining slot $K_s$, and the first signaling is transmitted in slot $n_1$.

As one reference embodiment of the above-mentioned sub-embodiments, the $K_s$ is equal to the sum of the $n_1$ and the first slot offset.

As one reference embodiment of the above-mentioned sub-embodiments, the $K_s$ is equal to

$$\left\lceil n_1 \cdot \frac{2^{\mu_1}}{2^{\mu_2}} \right\rceil$$

+ the first slot offset the first slot offset; wherein the $\mu_1$ and the $\mu_2$ are respectively a subcarrier spacing configuration of the first signaling and a subcarrier spacing configuration of the K signals.

As one sub-embodiment of the above-mentioned embodiments, the earliest time window in the first time window set starts at the slot $K_s$.

As one sub-embodiment of the above-mentioned embodiments, the first start symbol indicates a start symbol of each time window in the first time window set.

As one sub-embodiment of the above-mentioned embodiments, a start symbol of each time window in the first time window set is symbol S relative to a slot start, and the S is equal to the first start symbol.

As one sub-embodiment of the above-mentioned embodiments, any two time windows in the first time window set belong to two different slots respectively.

As one sub-embodiment of the above-mentioned embodiments, the number of symbols comprised in each time window in the first time window set is equal to the first length.

As one sub-embodiment of the above-mentioned embodiments, the first slot offset, the first start symbol and the first length are jointly used for determining the second time window set.

As one sub-embodiment of the above-mentioned embodiments, a slot to which the earliest time window in the second time window set belongs is slot $K_s$, and the n-th time window in the second time window starts at slot

$$\left(K_s + \left\lfloor \frac{\text{the first start symbol} + n \cdot \text{the first length}}{\text{the first integer}} \right\rfloor \right)$$ and ends at slot

$$\left(K_s + \left\lfloor \frac{\text{the first start symbol} + (n+1) \cdot \text{the first length} - 1}{\text{the first integer}} \right\rfloor \right);$$ a

start symbol of the n-th time window in the second time window set is symbol $mod(the$ first start symbol $+ n$ the first length, the first integer) relative to a slot start, and an end symbol is symbol $mod(the$ first start symbol $+ (n+1)$ the first length -1, the first integer) relative to a slot start; wherein the n = 0, ..., the number of time windows comprised in the second time window set is reduced by 1; the first integer is the number of symbols comprised per slot.

As one sub-embodiment of the above-mentioned embodiments, the number of symbols comprised in each time window in the second time window set is equal to the first length.

As one sub-embodiment of the above-mentioned embodiments, the K signals all carry the second bit block, and the K signals are respectively K repetition transmissions of the second bit block scheduled by the first signaling; the earliest time window in the first time window set is used for transmitting the first (earliest) repetition transmission of the second bit block scheduled by the first signaling.

As one reference embodiment of the above-mentioned sub-embodiments, the earliest one time window in the first time window set is used for transmitting the first (earliest) actual repetition transmissions of the second bit block scheduled by the first signaling.

As one embodiment, the first signaling indicates one entry in the resource assignment table, and the entry is used for determining a first slot offset, K0 start symbols, and K0 lengths; the first slot offset, the K0 start symbols and the K0 lengths are jointly used for determining the first time window set; the first slot offset is a non-negative integer, any start symbol in the K0 start symbols is a non-negative integer, and any length in the K0 lengths is a positive integer.

As one sub-embodiment of the above-mentioned embodiments, the first signaling is one DCI, and a DCI field time domain resource assignment in the first signaling indicates the entry.

As one sub-embodiment of the above-mentioned embodiments, the first slot offset is used for determining the slot $K_s$; the earliest time window in the first time window set starts at the slot $K_s$.

As one sub-embodiment of the above-mentioned embodiments, the earliest one time window in the first time window set is used for transmitting the first (earliest) PUSCH scheduled by the first signaling.

As one sub-embodiment of the above-mentioned embodiments, a start symbol of the n-th time window in the first time window set is symbol $S_n$ relative to a slot start, and the $S_n$ is equal to the n-th start symbol in the K0 start symbols; the number of symbols comprised in the n-th time window in the first time window set is equal to the n-th length in the K0 lengths; wherein the n = 0, ..., the K0 is reduced by 1.

As one embodiment, the first signaling indicates one entry in the resource assignment table, and the entry is used for determining K0 slot offsets, K0 start symbols, and K0 lengths; the K0 slot offsets, the K0 start symbols and the K0 lengths are jointly used for determining the first time window set; any slot offset in the K0 slot offsets is a non-negative integer, any start symbol in the K0 start symbols is a non-negative integer, and any length in the K0 lengths is a positive integer.

As one sub-embodiment of the above-mentioned embodiments, the first signaling is one DCI, and a DCI field time domain resource assignment in the first signaling indicates the entry.

As one sub-embodiment of the above-mentioned embodiments, the n-th time window in the first time window set starts at slot $K_n$, the n-th slot offset in the K0 slot offsets and $n_1$ are jointly used for determining the slot $K_n$, and the first signaling is transmitted in slot $n_1$; wherein the n = 0, ..., the K0 is reduced by 1.

As one reference embodiment of the above-mentioned sub-embodiments, the n-th slot offset and the $n_1$ are jointly used for determining slot $K_n$ in a manner similar to how the first slot offset and the $n_1$ are jointly used for determining slot $K_s$, except that the first slot offset is replaced by the n-th slot offset.

As one sub-embodiment of the above-mentioned embodiments, a start symbol of the n-th time window in the first time window set is symbol $S_n$ relative to a slot start, and the $S_n$ is equal to the n-th start symbol in the K0 start symbols; the number of symbols comprised in the n-th time window in the first time window set is equal to the n-th length in the K0 lengths; wherein the n = 0, ..., the K0 is reduced by 1.

As one embodiment, the first signaling comprises scheduling information of the K signals.

As one embodiment, the scheduling information comprises one or more of time domain resources, frequency domain resources, MCS (Modulation and Coding Scheme), DMRS (DeModulation Reference Signals) ports, HARQ process number, RV (Redundancy Version) or NDI (New Data Indicator).

As one embodiment, the first time domain resource comprises at least one symbol.

As one embodiment, the first time domain resource comprises one symbol.

As one embodiment, the first time domain resource comprises a plurality of consecutive symbols.

As one embodiment, the first time domain resource comprises a plurality of non-consecutive symbols.

As one embodiment, the first time domain resource comprises at least one slot.

As one embodiment, the first time domain resource comprises at least one subframe.

As one embodiment, a sender of the first signal-

As one embodiment, a sender of the first signaling simultaneously receives and sends wireless signals in the first time domain resource.

As one embodiment, a sender of the first signaling simultaneously receives and sends wireless signals in at least one symbol in the first time domain resource.

As one embodiment, a sender of the first signaling simultaneously receives and sends wireless signals in any symbol in the first time domain resource.

As one embodiment, a sender of the first signaling simultaneously receives and sends wireless signals in the first time domain resource in a cell where the K signals are located.

As one embodiment, a sender of the first signaling simultaneously receives and sends wireless signals in at least one symbol in the first time domain resource in a cell where the K signals are located.

As one embodiment, a sender of the first signaling simultaneously receives and sends wireless signals in at least one symbol in the first time domain resource in a cell group where the K signals are located.

As one embodiment, the first time domain resource comprises symbols that are simultaneously used for both uplink transmission and downlink transmission.

As one embodiment, any symbol in the first time domain resource can be simultaneously used for both uplink transmission and downlink transmission.

As one embodiment, any symbol in the first time domain resource is simultaneously used for both uplink transmission and downlink transmission.

As one embodiment, at least one symbol in the first time domain resource is simultaneously used for both uplink transmission and downlink transmission.

As one embodiment, any symbol in the first time domain resource is simultaneously used for both uplink transmission and downlink transmission in a cell where the K signals are located.

As one embodiment, at least one symbol in the first time domain resource is simultaneously used for both uplink transmission and downlink transmission in a cell where the K signals are located.

As one embodiment, at least one symbol in the first time domain resource is simultaneously used for both uplink transmission and downlink transmission in a cell group where the K signals are located.

As one embodiment, the first information block indicates that: a sender of the first signaling simultaneously receives and sends wireless signals in the first time domain resource.

As one embodiment, the first information block indicates that: any symbol in the first time domain resource is simultaneously used for both uplink transmission and downlink transmission.

As one embodiment, the K signals respectively comprise a baseband signal.

As one embodiment, the K signals respectively comprise a wireless signal.

As one embodiment, the K signals respectively comprise an RF signal.

As one embodiment, the first bit block comprises CSI.

As one embodiment, the first bit block comprises HARQ-ACK (HARQ-Acknowledgement).

As one embodiment, the HARQ-ACK comprises ACK.

As one embodiment, the HARQ-ACK comprises NACK (Negative ACK).

As one embodiment, the first bit block comprises SR (Scheduling Request) information.

As one embodiment, the first signaling is used for determining the first bit block.

As one embodiment, the K signals are respectively PUSCH repetition Type B transmissions.

As one embodiment, the K signals are respectively multiple PUSCH transmissions.

As one embodiment, the K signals are respectively multiple PUSCH transmissions scheduled by a single DCI.

As one embodiment, the first signal is sent in one time window in the first time window subset.

As one embodiment, in PUSCH scheduled by the first signaling and transmitted in the first time window set, only PUSCH sent in the first time window subset is used for carrying the first bit block.

As one embodiment, in PUSCH scheduled by the first signaling and transmitted in the first time window set, only PUSCH sent in the first time window subset is used for carrying UCI.

As one embodiment, only the first signal among the K signals is used for carrying the first bit block.

As one embodiment, only the first signal among the K signals is used for carrying UCI.

As one embodiment, in PUSCH transmissions scheduled by the first signaling and transmitted in the first time window set, only the first signal is used for carrying the first bit block.

As one embodiment, among the K signals, in addition to the first signal, at least one other signal is used for carrying the first bit block.

As one embodiment, in PUSCH transmissions scheduled by the first signaling and transmitted in the first time window set, in addition to the first signal, at least one other PUSCH transmission is used for carrying the first bit block.

As one embodiment, the first time window subset comprises only one time window, and the first signal is sent in the one time window in the first time window subset.

As one embodiment, the first time window subset comprises a plurality of time windows, the first signal is sent in a first time window in the K time windows, and a position of the first time window in the first time window subset is default.

As one embodiment, the first information block is transmitted on a downlink physical layer data channel (i.e., a downlink channel that can be used to carry physical layer data).

As one embodiment, the first information block is transmitted on PDSCH (Physical Downlink Shared Channel).

As one embodiment, the first signaling is transmitted on a downlink physical layer control channel (i.e., a downlink channel that can only be used to carry physical layer signaling).

As one embodiment, the first signaling is transmitted on PDCCH (Physical Downlink Control Channel).

As one embodiment, the first signaling is transmitted on a downlink physical layer data channel (i.e., a downlink channel that can be used to carry physical layer data).

As one embodiment, the first signaling is transmitted on PDSCH.

As one embodiment, any signal among the K signals is transmitted on an uplink physical layer data channel (i.e., an uplink channel that can be used to carry physical layer data).

As one embodiment, any signal among the K signals is transmitted on PUSCH.

As one embodiment, the K signals are respectively transmitted on K different PUSCHs.

As one embodiment, among the K signals, there exist two signals transmitted on the same PUSCH.

**Embodiment 2**

Embodiment 2 illustrates a schematic diagram of a network architecture according to one embodiment of the present application, as shown in FIG. 2.

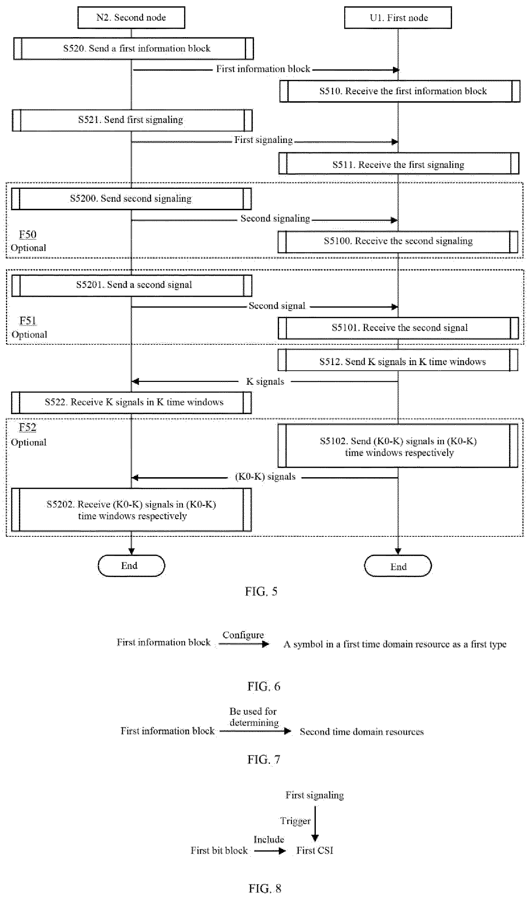

FIG. 2 illustrates the network architecture of LTE (Long-Term Evolution), LTE-A (Long-Term Evolution Advanced) and future 5G systems. The network architecture of LTE, LTE-A and future 5G systems is called EPS (Evolution Packet System). 5G NR or LTE network architectures may be referred to as 5GS (5G System)/EPS 200 or some other suitable terms. 5GS/EP S 200 may comprise one or more UE 201, UE 241 performing sidelink communication with the UE 201, NG-RAN (Next Generation Radio Access Network) 202, 5G-CN (5G Core Network)/EPC (Evolved Packet Core) 210, HSS (Home Subscriber Server)/UDM (Unified Data Management) 220, and Internet Service 230. 5GS/EPS 200 may be interconnected with other access networks, but these entities/interfaces are not shown for simplicity. As shown in FIG. 2, 5GS/EPS 200 provides packet switching services, however, those skilled in the art will readily understand that various concepts presented throughout the present application can be extended to networks providing circuit switching services. NG-RAN 202 comprises an NR Node B (gNB) 203 and other gNB 204. gNB 203 provides user and control plane protocol termination toward UE 201. gNB 203 may be connected to other gNB 204 via an Xn interface (for example, backhaul). gNB 203 may also be referred to as a base station, a base transceiver station, a radio base station, a radio transceiver, a transceiver function, a basic service set (BSS), an extended service set (ESS), a TRP (Transmitter Receiver Point) or some other suitable terms. gNB 203 provides UE 201 with access points to 5G-CN/EPC 210. Examples of UE 201 comprise cellular telephones, smart phones, session initiation protocol (SIP) telephones, laptops, personal digital assistants (PDA), satellite radios, global positioning systems, multimedia apparatuses, video apparatuses, digital audio players (for example, MP3 players), cameras, game consoles, drones, aircraft, narrowband physical network devices, machine type communication devices, land vehicles, automobiles, wearable devices, or any other similar functional apparatuses. Those skilled in the art may also refer to UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terms. gNB 203 is connected to 5G-CN/EPC 210 through an S1/NG interface. 5G-CN/EPC 210 comprises MME (Mobility Management Entity)/AMF (Authentication Management Field)/SMF (Session Management Function) 211, other MME/AMF/SMF 214, S-GW (Service Gateway)/UPF (User Plane Function) 212, and P-GW (Packet Date Network Gateway)/UPF 213. MME/AMF/SMF 211 is a control node that processes a signaling between UE 201 and 5G-CN/EPC 210. Generally, MME/AMF/SMF 211 provides bearer and connection management. All user IP (Internet Protocol) packets are transmitted through S-GW/UPF 212, and S-GW/UPF 212 itself is connected to P-GW/UPF 213. P-GW provides UE IP address assignment and other functions. P-GW/UPF 213 is connected to Internet Service 230. Internet service 230 comprises the operator's corresponding Internet protocol services, which may specifically comprise the Internet, Intranet, IMS (IP Multimedia Subsystem) and packet switching services.

As one embodiment, the first node in the present application comprises the UE 201.

As one embodiment, the second node in the present application comprises the gNB 203.

As one embodiment, the wireless link between the UE 201 and the gNB 203 comprises a cellular network link.

As one embodiment, the sender of the first information block comprises the gNB 203.

As one embodiment, the recipient of the first information block comprises the UE 201.

As one embodiment, the sender of the first signaling comprises the gNB 203.

As one embodiment, the recipient of the first signaling comprises the UE 201.

As one embodiment, the sender of the K signals comprises the UE 201.

As one embodiment, the recipient of the K signals comprises the gNB 203.

As one embodiment, the gNB 203 supports SBFD.

As one embodiment, the gNB 203 supports more flexible duplex modes or full duplex modes.

As one embodiment, the UE201 supports SBFD.

As one embodiment, the UE201 supports more flexible duplex modes or full duplex modes.

## Embodiment 3

Embodiment 3 illustrates a schematic diagram of an embodiment of a wireless protocol architecture of a user plane and a control plane according to one embodiment of the present application, as shown in FIG. 3.

FIG. 3 is a schematic diagram illustrating an embodiment of a radio protocol architecture used for a user plane 350 and a control plane 300. FIG. 3 presents the radio protocol architecture of the control plane 300 which is used between a first communication node device (UE or RSU (Road Side Unit) in V2X (Vehicle to Everything), onboard devices, or onboard communication modules) and a second node device (gNB, UE, or RSU in V2X, onboard devices, or onboard communication modules), or between two pieces of UE using three layers: Layer 1 (L1), Layer 2 (L2), and Layer 3 (L3). L1 is the lowest layer and implements various PHY (physical layer) signal processing functions. L1 is referred to herein as PHY 301. L2 305 is above the PHY 301 and is responsible for the link between a first node device and a second node device, or between two pieces of UE through PHY 301. L2 305 comprises a MAC sublayer 302, an RLC (Radio Link Control) sublayer 303, and a PDCP (Packet Data Convergence Protocol) sublayer 304, which terminate at a second node device. PDCP sublayer 304 provides multiplexing between different radio bearers and logical channels. PDCP sublayer 304 also provides security through data packet encryption, and provides handover support for a first communication node device between the second communication node devices. RLC sublayer 303 provides segmentation and reassembly of upper layer data packets, retransmission of lost data packets, and reordering of data packets to compensate for disordered reception caused by HARQ. MAC sublayer 302 provides multiplexing between logical channels and transport channels. MAC sublayer 302 is also responsible for allocating various radio resources (for example, resource blocks) in a cell among first communication node devices. MAC sublayer 302 is also responsible for HARQ operations. RRC sublayer 306 in L3 in the control plane 300 is responsible for obtaining radio resources (for example, radio bearers) and configuring the lower layer using an RRC signaling between a second communication node device and a first communication node device. The radio protocol architecture of user plane 350 comprises Layer 1 (L1) and Layer 2 (L2). The radio protocol architecture used for a first communication node device and a second communication node device in user plane 350 is generally the same as the corresponding layers and sublayers in the control plane 300 for physical layer 351, a PDCP sublayer 354 in L2 355, an RLC sublayer 353 in L2 355 and a MAC sublayer 352 in L2 355, but PDCP sublayer 354 also provides header compression for upper layer data packets to reduce radio transmission overheads. L2 355 in user plane 350 also comprises an SDAP (Service Data Adaptation Protocol) sublayer 356, and the SDAP sublayer 356 is responsible for mapping between QoS (Quality of Service) streams and data radio bearers (DRB) to support service diversity. Although not shown, a first communication node device may have several upper layers above L2 355, comprising a network layer (for example, IP layer) terminated at P-GW on the network side and an application layer terminated at the other terminal of the connection (for example, a remote UE, server, etc.).

As one embodiment, the wireless protocol architecture in FIG. 3 is applicable to the first node in the present application.

As one embodiment, the wireless protocol architecture in FIG. 3 is applicable to the second node in the present application.

As one embodiment, the first signaling is generated in the RRC sublayer 306.

As one embodiment, the first signaling is generated in the PHY301.

As one embodiment, the first signaling is generated in the MAC sublayer 302.

As one embodiment, the first information block is generated in the RRC sublayer 306.

As one embodiment, the first information block is generated in the MAC sublayer 302.

As one embodiment, the K signals are generated in the PHY 301 or the PHY 351.

As one embodiment, the higher level in the present application refers to a layer above the physical layer.

## Embodiment 4

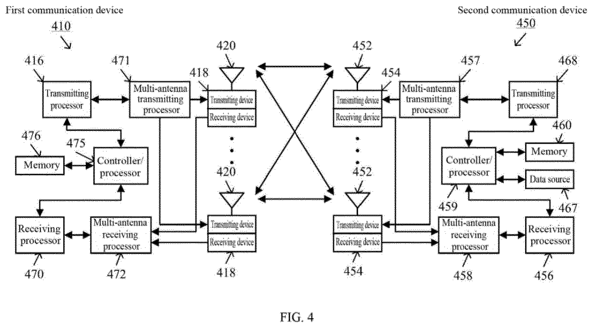

Embodiment 4 illustrates a schematic diagram of a first communication device and a second communication device according to one embodiment of the present application, as shown in FIG. 4. FIG. 4 is a block diagram of the first communication device 410 and a second communication device 450 that communicate with each other in the access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In a transmission from the first communication device 410 to the second communication device 450, at the first communication device 410, upper layer data packets from the core network are provided to the controller/processor 475. The controller/processor 475 implements the functionality of L2. In DL, the controller/processor 475 provides header compression, encryption, packet segmentation and reordering, multiplexing between logical channels and transport channels, and radio resource assignment of the second communication device 450 based on various priority metrics. The controller/processor 475 is also responsible for HARQ operations, retransmission of lost packets, and signaling to the second communication device 450. The transmitting processor 416 and the multi-antenna transmitting processor 471 implement various signal processing functions for L1 (that is, the physical layer). The transmitting processor 416 implements encoding and interleaving to facilitate forward error correction (FEC) at the second communication device 450, and mapping of signal clusters based on various modulation schemes (for example, Binary Phase Shift Keying (BPSK), Quadrature Phase Shift Keying (QPSK), M-Phase Shift Keying (M-PSK), and M-Quadrature Amplitude Modulation (M-QAM)). The multi-antenna transmitting processor 471 performs digital spatial precoding of the encoded and modulated symbols, comprising codebook-based precoding and non-codebook-based precoding and beamforming processing, to generate one or more parallel streams. The transmitting processor 416 then maps each parallel stream to a subcarrier, multiplexes the modulated symbols with a reference signal (for example, pilot) in the time domain and/or frequency domain, and then uses Inverse Fast Fourier Transform (IFFT) to generate a physical channel carrying the time domain multi-carrier symbol stream. The multi-antenna transmitting processor 471 then performs a simulated precoding/beamforming operation on the time domain multi-carrier symbol stream. Each transmitting device 418 converts the baseband multi-carrier symbol stream provided by the multi-antenna transmitting processor 471 into a radio frequency stream, and then provides it to different antennas 420.

In a transmission from the first communication device 410 to the second communication device 450, at the second communication device 450, each receiving device 454 receives a signal through its corresponding antenna 452. Each receiving device 454 recovers information modulated to a radio frequency carrier and converts the radio frequency stream into a baseband multi-carrier symbol stream to provide it to the receiving processor 456. The receiving processor 456 and the multi-antenna receiving processor 458 implement various signal processing functions of L1. The multi-antenna receiving processor 458 performs receiving simulated precoding/beamforming operations on the baseband multi-carrier symbol stream from the receiving device 454. The receiving processor 456 uses Fast Fourier Transform (FFT) to convert the baseband multi-carrier symbol stream from the time domain to the frequency domain after the receiving simulated precoding/beamforming operations. In the frequency domain, the physical layer data signals and the reference signals are demultiplexed by the receiving processor 456, where the reference signals are used for channel estimation, and the data signals undergo multi-antenna detection in the multi-antenna receiving processor 458 to recover any parallel streams destined for the second communication device 450. Symbols on each parallel stream are demodulated and recovered in the receiving processor 456 and generate soft decisions. The receiving processor 456 then decodes and deinterleaves the soft decisions to recover upper layer data and control signals transmitted by the first communication device 410 on the physical channel. The upper layer data and control signals are then provided to the controller/processor 459. The controller/processor 459 implements the functions of L2. The controller/processor 459 may be associated with a memory 460 storing program codes and data. The memory 460 may be referred to as a computer readable medium. In DL, the controller/processor 459 provides demultiplexing between transport channels and logical channels, packet reassembly, decryption, header decompression, and control signal processing to recover upper layer data packets from the core network. The upper layer data packets are then provided to all protocol layers above L2. Various control signals may also be provided to L3 for L3 processing. The controller/processor 459 is also responsible for error detection using Acknowledgement (ACK) and/or Negative Acknowledgement (NACK) protocols to support HARQ operations.

In a transmission from the second communication device 450 to the first communication device 410, at the second communication device 450, the data source 467 is used for providing upper layer data packets to the controller/processor 459. The data source 467 represents all protocol layers above L2. Similar to the transmission function at the first communication device 410 as described in DL, the controller/processor 459 implements header compression, encryption, packet segmentation and reordering, and multiplexing between logical channels and transport channels based on wireless resource assignment of the first communication device 410, thereby implementing L2 functions for the user plane and the control plane. The controller/processor 459 is also responsible for HARQ operations, retransmission of lost packets, and signaling to the first communication device 410. The transmitting processor 468 performs modulation mapping and channel encoding processing, and the multi-antenna transmitting processor 457 performs digital multi-antenna spatial precoding, including codebook-based precoding and non-codebook-based precoding, and beamforming processing. The transmitting processor 468 modulates the resulting parallel streams into multi-carrier/single-carrier symbol streams. These streams undergo simulated precoding/-beamforming operations in the multi-antenna transmitting processor 457 before being provided to different antennas 452 via transmitting device 454. Each transmitting device 454 first converts baseband symbol streams provided from the multi-antenna transmitting processor 457 into radio frequency symbol streams, and then provides the radio frequency symbol streams to the antenna 452.

In the transmission from the second communication device 450 to the first communication device 410, the function at the first communication device 410 is similar to the reception function at the second communication device 450 as described in the transmission from the first communication device 410 to the second communication device 450. Each receiving device 418 receives the radio frequency signals through its corresponding antenna 420, converts the received radio frequency signals into baseband signals, and provides the baseband signals to the multi-antenna receiving processor 472 and the receiving processor 470. The receiving processor 470 and the multi-antenna receiving processor 472 jointly implement the function of L1. The controller/processor 475 implements L2 functions. The controller/processor 475 may be associated with a memory 476 storing program codes and data. The memory 476 may be referred to as a computer readable medium. The controller/processor 475 provides demultiplexing between transmission channels and logical channels, packet reassembly, decryption, header decompression, and control signal processing to recover upper layer data packets from the second communication device 450. The upper layer data packets from the controller/processor 475 may be provided to the core network. The controller/processor 475 is also responsible for error detection using ACK and/or NACK protocols to support HARQ operations.

As one embodiment, the second communication device 450 comprises: at least one processor and at least one memory, the at least one memory comprising computer program codes; the at least one memory and the computer program codes are configured to be used together with the at least one processor. The second communication device 450 device receives at least a first information block and first signaling, wherein the first information block is used for determining a first time domain resource, and the first signaling is used for determining a first time window set, the first time window set comprising K time windows, and K being a positive integer greater than 1; respectively sending K signals in the K time windows; wherein each signal of the K signals carries one TB; a first signal among the K signals carries a first bit block, and the first bit block comprises UCI; the K time windows are divided into a first time window subset and a second time window subset, and each time window in the second time window subset overlaps with the first time domain resource; a signal, which is only sent in the first time window subset, among the K signals is used for carrying the first bit block.

As one embodiment, the second communication device 450 comprises: a memory storing a computer readable instruction program that generates an action when executed by at least one processor, the action comprising: receiving first information block and first signaling; sending K signals respectively in K time windows.

As one embodiment, the first communication device 410 comprises: at least one processor and at least one memory, the at least one memory comprising computer program codes; the at least one memory and the computer program codes are configured to be used together with the at least one processor. The first communication device 410 device sends at least a first information block and first signaling, wherein the first information block is used for determining a first time domain resource, and the first signaling is used for determining a first time window set, the first time window set comprising K time windows, and K being a positive integer greater than 1; respectively receiving K signals in the K time windows; wherein each signal of the K signals carries one TB; a first signal among the K signals carries a first bit block, and the first bit block comprises UCI; the K time windows are divided into a first time window subset and a second time window subset, and each time window in the second time window subset overlaps with the first time domain resource; a signal, which is only sent in the first time window subset, among the K signals is used for carrying the first bit block.

As one embodiment, the first communication device 410 comprises: a memory storing a computer readable instruction program that generates an action when executed by at least one processor, the action comprising: sending first signaling and first information block; receiving K signals respectively in K time windows.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first signaling and first information block.

As one embodiment, at least one of {the antenna 420, the transmitting device 418, the transmitting processor 416, the multi-antenna transmitting processor 471, the controller/processor 475, and the memory 476} is used for sending the first signaling and first information block.

As one embodiment, at least one of {the antenna 452, the receiving device 454, the receiving processor 456, the multi-antenna receiving processor 458, the controller/processor 459, the memory 460, and the data source 467} is used for sending K signals in the K time windows respectively.

As one embodiment, at least one of {the antenna 420, the transmitting device 418, the transmitting processor 416, the multi-antenna transmitting processor 471, the controller/processor 475, and the memory 476} is used for receiving K signals in the K time windows respectively.

## Embodiment 5

Embodiment 5 illustrates a flowchart of transmission between a first node and a second node according to one embodiment of the present application. In FIG. 5, a first node U1 and a second node N2 communicate via a wireless link, and steps in blocks F50 to F52 are optional. It is particularly noted that the order in the present embodiment does not limit the order of signal transmission and the order of implementation in the present application.

For the first node U1, in step S510, a first information block is received; in step S511, a first signaling is received; in step S5100, a second signaling is received; in step S5101, a second signal is received; in step S512, K signals are respectively sent in K time windows; in step S5102, (K0-K) signals are respectively sent in (K0-K) time windows.

For the second node N2, in step S520, a first information block is received; in step S521, a first signaling is sent; in step S5200, a second signaling is sent; in step S5201, a second signal is sent; in step S522, K signals are respectively received in K time windows; in step S5202, (K0-K) signals are respectively received in (K0-K) time windows.

In Embodiment 5, the first information block is used by the first node U1 to determine a first time domain resource, the first signaling is used by the first node U1 to determine a first time window set, and the first time window set comprises K time windows, K being a positive integer greater than 1; each of the K signals carries one TB; a first signal among the K signals carries a first bit block, and the first bit block comprises UCI; the K time windows are divided into a first time window subset and a second time window subset, and each time window in the second time window subset overlaps with the first time domain resource; a signal, which is only sent in the first time window subset, among the K signals is used for carrying the first bit block.

As one embodiment, the first node U1 is the first node in the present application.

As one embodiment, the second node N2 is the second node in the present application.

As one embodiment, an air interface between the second node N2 and the first node U1 comprises a wireless interface between a base station device and user equipment.

As one embodiment, an air interface between the second node N2 and the first node U1 comprises a wireless interface between a relay node device and user equipment.

As one embodiment, an air interface between the second node N2 and the first node U1 comprises a wireless interface between user equipment and user equipment.

As one embodiment, the first signaling is transmitted in PDCCH.

As one embodiment, the first signaling is transmitted in PDSCH.

As one embodiment, the first information block is transmitted in PDSCH.

As one embodiment, the K signals are transmitted in PUSCH.

As one embodiment, the first information block is earlier than the first signaling in time domain.

As one embodiment, the first information block is later than the first signaling in time domain.

As one embodiment, steps in block F50 of FIG. 5 exist, and the method used in the first node for wireless communication comprises: receiving second signaling, wherein the second signaling is used for determining the first bit block and a reference time window, and the reference time window overlaps with each time window in the K time windows.

As one embodiment, the second signaling comprises a higher layer signaling.

As one embodiment, the second signaling comprises a RRC signaling.

As one embodiment, the second signaling comprises a MAC CE.

As one embodiment, the second signaling comprises a L1 signaling.

As one embodiment, the second signaling comprises DCI.

As one embodiment, the format of the second signaling is one of format 1_0, format 1_1 or format 1_2.

As one embodiment, the first bit block comprises HARQ-ACK.

As one embodiment, the reference time window comprises at least one symbol.

As one embodiment, the reference time window comprises one or more consecutive symbols.

As one embodiment, the reference time window comprises at least one slot.

As one embodiment, the reference time window comprises one slot.

As one embodiment, the reference time window comprises one or more consecutive slots.

As one embodiment, the second signaling indicates the reference time window.

As one embodiment, the second signaling indicates a first PUCCH (Physical Uplink Control Channel) resource, and the reference time window comprises symbols occupied by the first PUCCH resource.

As one embodiment, the second signaling indicates a first PUSCH, and the reference time window comprises symbols occupied by the first PUSCH.

As one embodiment, each time window in the K time windows comprises at least one symbol overlapping with the reference time window.

As one embodiment, the K time windows comprise all time windows in the first time window set that overlap with the reference time window.

As one embodiment, the K time windows consist of all time windows in the first time window set that overlap with the reference time window.

As one embodiment, any time window in the first time window set overlaps with the reference time window.

As one embodiment, there exists at least one time window in the first time window set that is orthogonal to the reference time window.

As one embodiment, the second signaling is transmitted on PDCCH.

As one embodiment, the second signaling is transmitted on PDSCH.

As one embodiment, steps in block F50 of FIG. 5 exist, and the method used in the second node for wireless communication comprises: sending second signaling, where the second signaling is used by the first node U1 to determine the first bit block and a reference time window, and the reference time window overlaps with each time window in the K time windows.

As one embodiment, steps in block F51 of FIG. 5 exist, and the method used in the first node for wireless communication comprises: receiving a second signal; wherein the second signaling is used by the first node U1 to determine configuration information of the second signal, and the second signal is used by the first node U1 to determine the first bit block.

As one embodiment, steps in block F51 of FIG. 5 exist, and the method used in the second node for wireless communication comprises: sending a second signal; wherein the second signaling is used for determining configuration information of the second signal, and the second signal is used for determining the first bit block.

As one embodiment, steps in block F52 of FIG. 5 exist, and the method used in the first node for wireless communication comprises: sending (K0-K) signals respectively in (K0-K) time windows; the first time window set comprises K0 time windows, K0 being a positive integer greater than the K; any time window in the K time windows is one of the K0 time windows; the (K0-K) time windows are (K0-K) time windows in the K0 time windows that do not belong to the K time windows.

As one embodiment, the K signals respectively carry the K bit blocks, and the (K0-K) signals respectively carry (K0-K) bit blocks.

As one embodiment, the K0 signals respectively correspond to K0 different HARQ process numbers, and the K0 signals comprise the K signals and the (K0-K) signals.

As one embodiment, the K signals all carry the second bit block, and the (K0-K) signals all carry the second bit block.

As one embodiment, the K0 signals correspond to a same HARQ process number, and the K0 signals comprise the K signals and the (K0-K) signals.

As one embodiment, the K0 signals are respectively transmitted on PUSCH.

As one embodiment, the K0 signals are respectively transmitted on K0 PUSCHs.

As one embodiment, steps in block F52 of FIG. 5 exist, and the method used in the second node for wireless communication comprises: receiving (K0-K) signals respectively in (K0-K) time windows; the first time window set comprises K0 time windows, K0 being a positive integer greater than the K; any time window in the K time windows is one of the K0 time windows; the (K0-K) time windows are (K0-K) time windows in the K0 time windows that do not belong to the K time windows.

As one embodiment, steps in block F52 in FIG. 5 do not exist.

As one sub-embodiment of the above-mentioned embodiments, the first time window set comprises K0 time windows, K0 being a positive integer greater than K; the first node sends signals only in the K time windows in the K0 time windows.

As one sub-embodiment of the above-mentioned embodiments, the first time window set comprises K0 time windows, K0 being a positive integer greater than K; The first node sends PUSCH scheduled by the first signaling in only the K time windows in the K0 time windows.

Embodiment 6

Embodiment 6 illustrates a schematic diagram of configuring symbols in a first time domain resource as a first type by a first information block according to one embodiment of the present application, as shown in FIG. 6.

As one embodiment, the first information block configures symbols in the first time domain resource as the first type in a cell where the K signals are located.

As one embodiment, the first information block configures symbols in the first time domain resource as the first type in a cell group where the K signals are located.

As one embodiment, the first information block configures symbols in the first time domain resource as the first type in one BWP (BandWidth Part) of a cell where the K signals are located.

As one embodiment, the first information block configures symbols in the first time domain resource as the first type in BWP occupied by the K signals.

As one embodiment, the meaning of the sentence "configures symbols in the first time domain resource as the first type" includes: configuring each symbol in the first time domain resource as the first type.

As one embodiment, the meaning of the sentence "configures symbols in the first time domain resource as the first type" includes: configuring at least one symbol in the first time domain resource as the first type.

As one embodiment, the meaning of the sentence "configures symbols in the first time domain resource as the first type" includes: configuring the type of symbols in the first time domain resource as the first type.

As one embodiment, the meaning of the sentence "configures symbols in the first time domain resource as the first type" includes: configuring the type of each symbol in the first time domain resource as the first type.

As one embodiment, the meaning of the sentence "configures symbols in the first time domain resource as the first type" includes: configuring the type of at least one symbol in the first time domain resource as the first type.

As one embodiment, the meaning of the sentence "the first information block is used for determining a first time domain resource" includes: the first information block configures symbols in the first time domain resource as the first type.

As one embodiment, the meaning of the sentence "the first information block is used for determining a first time domain resource" includes: the first information block configures each symbol in the first time domain resource as the first type.

As one embodiment, the meaning of the sentence "the first information block is used for determining a first time domain resource" includes: the first information block indicates the type of each symbol in the first time domain resource.

As one embodiment, the meaning of the sentence "the first information block is used for determining a first time domain resource" includes: the first information block indicates that the type of each symbol in the first time domain resource is the first type.

As one embodiment, the meaning of the sentence "the first information block is used for determining a first time domain resource" includes: the first information block configures at least one symbol in the first time domain resource as the first type.

As one embodiment, if one symbol is configured as the first type, a sender of the first signaling simultaneously receives and sends wireless signals on the one symbol.

As one embodiment, if one symbol is not configured as the first type, a sender of the first signaling only receives wireless signals or only sends wireless signals on the one symbol.

As one embodiment, the first type is one type in a first type set, wherein any symbol is configured as one type in the first type set, and types in the first type set includes the first type, uplink, and downlink.

As one sub-embodiment of the above-mentioned embodiments, the first type set comprises a flexible type.

As one embodiment, the first type is different from both uplink and downlink.

As one embodiment, the first type is different from uplink, downlink and flexible.

Embodiment 7

Embodiment 7 illustrates a schematic diagram of a first information block being used for determining a second time domain resource according to one embodiment of the present application, as shown in FIG. 7. In FIG. 7, the second time domain resource and the first time domain resource are orthogonal to each other; each time window in the first time window subset overlaps the second time domain resource.

As one embodiment, the second time domain resource comprises at least one symbol.

As one embodiment, the second time domain resource comprises a plurality of consecutive symbols.

As one embodiment, the second time domain resource comprises a plurality of non-consecutive symbols.

As one embodiment, the second time domain resource comprises at least one slot.

As one embodiment, the second time domain resource comprises at least one subframe.

As one embodiment, a sender of the first signaling only receives wireless signals or only sends wireless signals in the second time domain resource.

As one embodiment, a sender of the first signaling only receives wireless signals in the second time domain resource.

As one embodiment, a sender of the first signaling only receives wireless signals or only sends wireless signals in any symbol in the second time domain resource.

As one embodiment, a sender of the first signaling only receives wireless signals in any symbol in the second time domain resource.

As one embodiment, a sender of the first signaling only receives wireless signals or only sends wireless signals in at least one symbol in the second time domain resource.

As one embodiment, a sender of the first signaling only receives wireless signals or only sends wireless signals in any symbol in the second time domain resource in a cell where the K signals are located.

As one embodiment, a sender of the first signaling only receives wireless signals or only sends wireless signals in any symbol in the second time domain resource in a cell group where the K signals are located.

As one embodiment, the second time domain resource comprises symbols that are only used for uplink transmission or only used for downlink transmission.

As one embodiment, the second time domain resource comprises symbols that are only used for uplink transmission.

As one embodiment, any symbol in the second time domain resource is only used for uplink transmission or only used for downlink transmission.

As one embodiment, any symbol in the second time domain resource is only used for uplink transmission.

As one embodiment, any symbol in the second time domain resource is only used for uplink transmission or only used for downlink transmission in a cell where the K signals are located.

As one embodiment, any symbol in the second time domain resource is only used for uplink transmission or only used for downlink transmission in a cell group where the K signals are located.

As one embodiment, there exist two symbols in the second time domain resource, where one of the two symbols is only used for uplink transmission and the other of the two symbols is only used for downlink transmission.

As one embodiment, each time window in the first time window subset belongs to the second time domain resource.

As one embodiment, any symbol in any time window in the first time window subset belongs to the second time domain resource.

As one embodiment, at least one symbol in any time window in the first time window subset belongs to the second time domain resource.

As one embodiment, any time window in the second time window subset and the second time domain resource are orthogonal to each other.

As one embodiment, any symbol in any time window in the second time window subset does not belong to the second time domain resource.

As one embodiment, at least one symbol in any time window in the second time window subset does not belong to the second time domain resource.

As one embodiment, the first information block configures symbols in the second time domain resource as a second type.

As one embodiment, the first information block configures each symbol in the second time domain resource as a second type.

As one embodiment, the first information block configures the type of each symbol in the second time domain resource as a second type.

As one embodiment, if a symbol is configured as the second type, a sender of the first signaling only receives wireless signals or only sends wireless signals on the one symbol.

As one embodiment, if a symbol is not configured as the second type, a sender of the first signaling simultaneously receives and sends wireless signals on the one symbol.

As one embodiment, the second type is one of uplink or downlink.

As one embodiment, the second type is one of uplink, downlink or flexible.

As one embodiment, the second type comprises both uplink and downlink.

As one embodiment, the second type is different from uplink, downlink and flexible.

As one embodiment, a first time domain resource pool comprises the first time domain resource and the second time domain resource, wherein the first information block indicates the first time domain resource from the first time domain resource pool, and configures symbols in the first time domain resource as the first type.

As one sub-embodiment of the above-mentioned embodiments, the first information block indicates that only symbols in the first time domain resource are configured as the first type in the first time domain resource pool.

As one sub-embodiment of the above-mentioned embodiments, the first time domain resource pool comprises the first time domain resource and the second time domain resource.

As one sub-embodiment of the above-mentioned embodiments, the second time domain resource comprises all symbols in the first time domain resource pool excluding the first time domain resource.

As one sub-embodiment of the above-mentioned embodiments, the first time domain resource pool comprises a plurality of symbols.

As one embodiment, a first time domain resource pool comprises the first time domain resource and the second time domain resource, wherein the first information block indicates the second time domain resource from the first time domain resource pool, and configures symbols in the second time domain resource as the second type.

As one sub-embodiment of the above-mentioned embodiments, the first information block indicates that only symbols in the second time domain resource are configured as the second type in the first time domain resource pool.

As one sub-embodiment of the above-mentioned embodiments, the first time domain resource pool comprises the first time domain resource and the second time domain resource.

As one sub-embodiment of the above-mentioned embodiments, the first time domain resource comprises all symbols in the first time domain resource pool excluding the second time domain resource.

As one sub-embodiment of the above-mentioned embodiments, the first time domain resource pool comprises a plurality of symbols.

## Embodiment 8

Embodiment 8 illustrates a schematic diagram of relationships among a first bit block, first CSI and first signaling according to one embodiment of the present application, as shown in FIG. 8. In FIG. 8, the first bit block comprises the first CSI, and the first signaling is used for triggering the first CSI.

As one embodiment, the CSI refers to: Channel State Information.

As one embodiment, the first signaling is used for triggering the reporting of the first CSI.

As one embodiment, a second field in the first signaling is used for triggering the first CSI, wherein the second field comprises a DCI field CSI request.

As one embodiment, the first signaling indicates a trigger state of the first CSI.

As one sub-embodiment of the above-mentioned embodiments, the first signaling indicates a trigger state for *CSI-ReportConfig* corresponding to the first CSI.

As one embodiment, the first CSI is aperiodic.

As one embodiment, the first CSI is periodic.

As one embodiment, the first CSI is semi-persistent.

As one embodiment, the *CSI-ReportConfig* corresponding to the first CSI is aperiodic.

As one embodiment, the *CSI-ReportConfig* corresponding to the first CSI is periodic.

As one embodiment, the *CSI-ReportConfig* corresponding to the first CSI is semi-persistent.

**Embodiment 9**

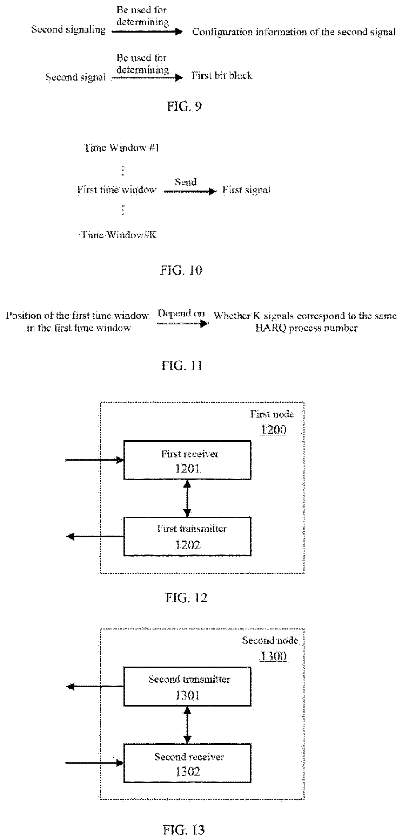

Embodiment 9 illustrates a schematic diagram of relationships among a first bit block, a second signal, and second signaling according to one embodiment of the present application, as shown in FIG. 9. In FIG. 9, the second signaling is used for determining configuration information of the second signal, and the second signal is used for determining the first bit block.

As one embodiment, the meaning of the sentence "the second signaling is used for determining the first bit block" includes: the second signaling is used for determining configuration information of the second signal, and the second signal is used for determining the first bit block.

As one embodiment, the second signal comprises one TB or one CBG (Code Block Group).

As one embodiment, the configuration information of the second signal includes one or more of time domain resources, frequency domain resources, MCS (Modulation and Coding Scheme), DMRS (DeModulation Reference Signals) ports, HARQ process number, RV (Redundancy Version), NDI (New Data Indicator), or TCI (Transmission Configuration Indicator) state.

As one embodiment, the second signaling indicates the configuration information of the second signal.

As one embodiment, the second signaling comprises the configuration information of the second signal.

As one embodiment, the second signaling is used for scheduling the second signal.

As one embodiment, the first bit block comprises HARQ-ACK for the second signal.

As one embodiment, the first bit block comprises HARQ-ACK for the TB or CBG carried by the second signal.

As one embodiment, the first bit block indicates whether the second signal is correctly received.

As one embodiment, the first bit block indicates whether the TB or CBG carried by the second signal is correctly received.

As one embodiment, the second signaling indicates a first PUCCH resource, and the reference time window comprises time domain resources occupied by the first PUCCH resource.

As one sub-embodiment of the above-mentioned embodiments, the first PUCCH resource is reserved for HARQ-ACK for the second signal.

As one sub-embodiment of the above-mentioned embodiments, the reference time window is time domain resources occupied by the first PUCCH resource.

As one sub-embodiment of the above-mentioned embodiments, the reference time window is a slot occupied by the first PUCCH resource.

As one sub-embodiment of the above-mentioned embodiments, the second signaling comprises DCI, and a DCI field PUCCH resource indicator of the second signaling indicates the first PUCCH resource.

As one sub-embodiment of the above-mentioned embodiments, the second signaling comprises DCI, and a DCI field PD SCH-to-HARQ_feedback timing indicator of the second signaling indicates a slot occupied by the first PUCCH resource.

As one embodiment, the second signaling includes DCI, and the DCI field PD SCH-to-HARQ_feedback timing indicator of the second signaling indicates the reference time window.

As one embodiment, the second signaling includes DCI, and the DCI field PDSCH-to-HARQ_feedback timing indicator and DCI field PUCCH resource indicator of the second signaling jointly indicate the reference time window.

As one embodiment, the meaning of the sentence "the second signal is used for determining the first bit block" includes: the first bit block comprises HARQ-ACK for the second signal.

As one embodiment, the second signal comprises a reference signal.

As one embodiment, the second signal comprises a downlink reference signal.

As one embodiment, the second signal comprises CSI-RS (CSI-Reference Signal).

As one embodiment, the second signal comprises an SS (Synchronisation Signal)/PBCH (Physical Broadcast Channel) Block.

As one embodiment, the first bit block comprises second CSI, and measurement for the second signal is used for determining the second CSI.

As one sub-embodiment of the above-mentioned embodiments, the first node obtains channel measurement for calculating the second CSI based on the second signal.

As one sub-embodiment of the above-mentioned embodiments, the first node obtains interference measurement for calculating the second CSI based on the second signal.

As one sub-embodiment of the above-mentioned embodiments, the second CSI is periodic or semi-persistent.

As one sub-embodiment of the above-mentioned embodiments, *CSI-ReportConfig* corresponding to the second CSI is periodic or semi-persistent.

As one embodiment, the configuration information of the second signal comprises part or all of the following: time domain resources, frequency domain resources, CDM (Code Division Multiplexing) type, CDM group, scramblingID, periodicity, QCL (Quasi Co-Location) relationship, density, number of ports, or TCI state.

As one embodiment, the second signaling comprises a higher layer signaling.

As one embodiment, the second signal comprises CSI-RS, and the second signaling indicates an identity of the second signal.

As one embodiment, an identity of the second signal comprises *NZP-CSI-RS-Resource-SetId.*

As one embodiment, an identity of the second signal comprises *SSB-Index.*

As one embodiment, the second signaling comprises *CSI-ReportConfig* IE.

As one embodiment, the second signaling comprises *CSI-ResourceConfig* IE.

As one embodiment, the second signaling comprises *CSI-MeasConfig* IE.

As one embodiment, the second signaling is used for activating *CSI-ReportConfig* corresponding to the second CSI.

As one sub-embodiment of the above-mentioned embodiments, *CSI-ReportConfig* corresponding to the second CSI is semi-persistent.

As one sub-embodiment of the above-mentioned embodiments, the higher level parameter *"reportConfigType"* in *"CSI-ReportConfig* IE corresponding to the second CSI is set to *"semiPersistentOnPUCCH".*

As one sub-embodiment of the above-mentioned embodiments, the second signaling comprises MAC CE.

As one embodiment, the second signaling indicates a second PUCCH resource, and the reference time window comprises time domain resources occupied by the second PUCCH resource.

As one sub-embodiment of the above-mentioned embodiments, the second PUCCH resource is used for carrying reporting for *CSI-ReportConfig* corresponding to the second CSI.

As one sub-embodiment of the above-mentioned embodiments, the reference time window is time domain resources occupied by the second PUCCH resource.

As one sub-embodiment of the above-mentioned embodiments, the reference time window is a slot occupied by the second PUCCH resource.

As one embodiment, the meaning of the sentence "the second signal is used for determining the first bit block" includes: measurement for the second signal is used for determining the second CSI.

## Embodiment 10

Embodiment 10 illustrates a schematic diagram of a first signal being sent in a first time window in K time windows according to one embodiment of the present application, as shown in FIG. 10. In FIG. 10, the K time windows are respectively represented as time window #1, ..., time window #K, the first signal is sent in a first time window in the K time windows, and a position of the first time window in the first time window subset is default.

As one embodiment, the number of time windows comprised in the first time window subset is greater than 1.

As one embodiment, the meaning of the phrase "default" includes: not requiring configuration.

As one embodiment, the meaning of the phrase "default" includes: no higher level signaling configuration is required.

As one embodiment, the meaning of the phrase "default" includes: no physical layer signaling configuration is required.

As one embodiment, the meaning of the phrase "default" includes: no explicit configuration is required.

As one embodiment, the meaning of the phrase "default" includes: predefined.

As one embodiment, in the case where the number of time windows comprised in the first time window subset is determined, a position of the first time window in the first time window subset does not require configuration.

As one embodiment, in the case where the K signals correspond to a same HARQ process number is determined, a position of the first time window in the first time window subset does not require configuration.

As one embodiment, in the case where the number of time windows comprised in the first time window subset is determined and whether the K signals correspond to a same HARQ process number is determined, a position of the first time window in the first time window subset does not require configuration.

As one embodiment, the meaning of the sentence "a position of the first time window in the first time window subset is default" includes: the first time window is the earliest one time window in the first time window subset.

As one embodiment, the meaning of the sentence "a position of the first time window in the first time window subset is default" includes: the first time window is the earliest one time window in the first time window subset, and the number of symbols comprised in the earliest one time window is greater than 1.

As one embodiment, the meaning of the sentence "a position of the first time window in the first time window subset is default" includes: the first time window is the earliest one time window in the first time window subset that comprises the number of symbols greater than 1.

As one embodiment, the meaning of the sentence "a position of the first time window in the first time window subset is default" includes: the first time window is the last one time window in the first time window subset.

As one embodiment, the meaning of the sentence "a position of the first time window in the first time window subset is default" includes: the first time window is the last one time window in the first time window subset that comprises the number of symbols greater than 1.

As one embodiment, the meaning of the sentence "a position of the first time window in the first time window subset is default" includes: the first time window is the second last time window in the first time window subset.

As one embodiment, the meaning of the sentence "a position of the first time window in the first time window subset is default" includes: if the number of time windows comprised in the first time window subset is equal to 2, the first time window is the last one time window in the first time window subset; if the number of time windows comprised in the first time window subset is greater than 2, the first time window is the second last time window in the first time window subset.

As one embodiment, "the earliest one" refers to the first one in order.

**Embodiment 11**

Embodiment 11 illustrates a schematic diagram of a position of a first time window in a first time subset depending on whether K signals correspond to a same HARQ process number according to one embodiment of the present application, as shown in FIG. 11.

As one embodiment, whether the K signals correspond to a same HARQ process number is related to whether the K signals are multiple PUSCH transmissions scheduled by the same DCI.

As one embodiment, when the K signals are K PUSCH transmissions scheduled by the same DCI, at least two signals among the K signals correspond to different HARQ process numbers.

As one embodiment, when the K signals are multiple PUSCH transmissions scheduled by the same DCI, any two signals among the K signals correspond to different HARQ process numbers.

As one embodiment, when the K signals are PUSCH transmission based on repetition Type A or repetition Type B, the K signals correspond to a same HARQ process number.

As one embodiment, whether the K signals correspond to a same HARQ process number is related to whether the first node is configured with a first higher level parameter, and a name of the first higher level parameter includes *"pusch-TimeDomainAllocationList-ForMultiPUSCH"*.

As one embodiment, the first higher level parameter is *"pusch-TimeDomainAllocationListForMulti-*

*PUSCH"*.

As one embodiment, the first higher level parameter is *"pusch-TimeDomainAllocationListForMultiPUSCH-r16"* or *"pusch-TimeDomainAllocationListForMultiPUSCH-r17"*.

As one embodiment, when the first node is configured with the first higher layer parameter, at least two pieces of information in the K signals correspond to different HARQ process numbers.

As one embodiment, when the first node is configured with the first higher layer parameter, any two pieces of information in the K signals correspond to different HARQ process numbers;

As one embodiment, when the first node is not configured with the first higher layer parameter, the K signals correspond to a same HARQ process number.

As one embodiment, when at least two signals among the K signals correspond to different HARQ process numbers, the first time window is the last one time window or the second last time window in the first time window subset.

As one embodiment, when the K signals correspond to a same HARQ process number, the first time window is the earliest one time window in the first time window subset.

As one embodiment, a position of the first time window in the first time window subset depends on the number of time windows comprised in the first time window subset.

As one embodiment, when at least two signals among the K signals correspond to different HARQ process numbers and the number of time windows comprised in the first time window subset is equal to 2, the first time window is the last one time window in the first time window subset.

As one embodiment, when at least two signals among the K signals correspond to different HARQ process numbers and the number of time windows comprised in the first time window subset is greater than 2, the first time window is the second last time window in the first time window subset.

As one embodiment, a position of the first time window in the first time window subset depends on whether the first time window subset comprises the second last time window in the K time windows.

As one embodiment, when at least two signals among the K signals correspond to different HARQ process numbers and the number of time windows comprised in the first time window subset is greater than 2, if the first time window subset comprises the second last time window in the K time windows, the first time window is the second last time window in the K time windows; if the first time window subset does not comprise the second last time window in the K time windows, the first time window is the last one time window in the first time window subset.

As one embodiment, a position of the first time window in the first time window subset depends on whether the K signals are K PUSCH transmissions scheduled by the same DCI or PUSCH transmissions based on repetition Type A or repetition Type B.

As one embodiment, when the K signals are K PUSCH transmissions scheduled by the same DCI, the first time window is the last one time window or the second last time window in the first time window subset.

As one embodiment, when the K signals are PUSCH transmissions based on repetition Type A or repetition Type B, the first time window is the earliest one time window in the first time window subset.

As one embodiment, when the K signals are K PUSCH transmissions scheduled by the same DCI and the number of time windows comprised in the first time window subset is equal to 2, the first time window is the last one time window in the first time window subset.

As one embodiment, when the K signals are K PUSCH transmissions scheduled by the same DCI and the number of time windows comprised in the first time window subset is greater than 2, the first time window is the second last time window in the first time window subset.

As one embodiment, when the K signals are K PUSCH transmissions scheduled by the same DCI and the number of time windows comprised in the first time window subset is greater than 2, if the first time window subset comprises the second last time window in the K time windows, the first time window is the second last time window in the K time windows; if the first time window subset does not comprise the second last time window in the K time windows, the first time window is the last one time window in the first time window subset.

**Embodiment 12**

Embodiment 12 illustrates a structural block diagram of a processing apparatus for a first node according to one embodiment of the present application, as shown in FIG. 12. In FIG. 12, the processing apparatus 1200 in the first node comprises a first receiver 1201 and a first transmitter 1202.

In Embodiment 12, the first receiver 1201 receives a first information block and first signaling; The first transmitter 1202 sends K signals respectively in K time windows.

In Embodiment 12, the first information block is used for determining a first time domain resource, the first signaling is used for determining a first time window set, and the first time window set comprises K time windows, K being a positive integer greater than 1; each of the K signals carries one TB; a first signal among the K signals carries a first bit block, and the first bit block comprises UCI; the K time windows are divided into a first time window subset and a second time window subset, and each time window in the second time window subset overlaps with the first time domain resource; a signal, which is only sent in the first time window subset, among the K signals is used for carrying the first bit block.

As one embodiment, the first information block configures symbols in the first time domain resource as a first type.

As one embodiment, the first bit block comprises a first CSI, and the first signaling is used for triggering the first CSI.

As one embodiment, the first receiver 1201 receives a second signaling; the second signaling is used for determining the first bit block and a reference time window, and the reference time window overlaps with each time window in the K time windows.

As one embodiment, the second signaling is used for determining configuration information of a second signal, and the second signal is used for determining the first bit block.

As one embodiment, the first receiver 1201 receives the second signal.

As one embodiment, the first signal is sent in a first time window of the K time windows, and a position of the first time window in the first time window subset is default.

As one embodiment, a position of the first time window in the first time window subset depends on whether the K signals correspond to a same HARQ process number.

As one embodiment, the first node is a user equipment.

As one embodiment, the first node is a relay node device.

As one embodiment, a sender of the first signaling simultaneously receives and sends wireless signals in at least one symbol in the first time domain resource; at least one symbol in any time window in the second time window subset belongs to the first time domain resource, and at least one symbol in any time window in the first time window subset does not belong to the first time domain resource.

As one embodiment, a sender of the first signaling simultaneously receives and sends wireless signals in at least one symbol in the first time domain resource; each time window in the second time window subset belongs to the first time domain resource, and each time window in the first time window subset and the first time domain resource are orthogonal to each other.

As one embodiment, the first information block is used for determining a second time domain resource, and the second time-frequency resource and the first time-frequency resource are orthogonal to each other; a sender of the first signaling simultaneously receives and sends wireless signals in at least one symbol in the first time domain resource, and a sender of the first signaling only receives wireless signals or only sends wireless signals in any symbol in the second time domain resource; at least one symbol in any time window in the first time window subset belongs to the second time domain resource, and at least one symbol in any time window in the second time window subset does not belong to the second time domain resource.

As one sub-embodiment of the above-mentioned embodiments, each time window in the first time window subset belongs to the second time domain resource, and any time window in the second time window subset and the second time domain resource are orthogonal to each other.

As one embodiment, the first receiver 1201 comprises at least one of {an antenna 452, a receiving device 454, a receiving processor 456, a multi-antenna receiving processor 458, a controller/processor 459, a memory 460, and a data source 467} in Embodiment 4.

As one embodiment, the first transmitter 1202 comprises at least one of {an antenna 452, a transmitting device 454, a transmitting processor 468, a multi-antenna transmitting processor 457, a controller/processor 459, a memory 460, a data source 467} in Embodiment 4.

### Embodiment 13

Embodiment 13 illustrates a structural block diagram of a processing apparatus for a second node according to one embodiment of the present application, as shown in FIG. 13. In FIG. 13, the processing apparatus 1300 in the second node comprises a second transmitter 1301 and a second receiver 1302.

In Embodiment 13, the second transmitter 1301 sends a first information block and first signaling; the second receiver 1302 receives K signals respectively in K time windows.

In Embodiment 13, the first information block is used for determining a first time domain resource, the first signaling is used for determining a first time window set, and the first time window set comprises K time windows, K being a positive integer greater than 1; each of the K signals carries one TB; a first signal among the K signals carries a first bit block, and the first bit block comprises UCI; the K time windows are divided into a first time window subset and a second time window subset, and each time window in the second time window subset overlaps with the first time domain resource; a signal, which is only sent in the first time window subset, among the K signals is used for carrying the first bit block.

As one embodiment, the first information block configures symbols in the first time domain resource as a first type.

As one embodiment, the first bit block comprises a first CSI, and the first signaling is used for triggering the first CSI.

As one embodiment, the second transmitter 1301 sends a second signaling; the second signaling is used for determining the first bit block and a reference time window, and the reference time window overlaps with each time window in the K time windows.

As one embodiment, the second signaling is used for determining configuration information of a second signal, and the second signal is used for determining the first bit block.

As one embodiment, the second transmitter 1301 sends the second signal.

As one embodiment, the first signal is sent in a first time window of the K time windows, and a position of the first time window in the first time window subset is default.

As one embodiment, a position of the first time window in the first time window subset depends on whether the K signals correspond to a same HARQ process number.

As one embodiment, the second node is a base station device.

As one embodiment, the second node is user equipment.

As one embodiment, the second node is a relay node device.

As one embodiment, the second node simultaneously receives and sends wireless signals in at least one symbol in the first time domain resource; at least one symbol in any time window in the second time window subset belongs to the first time domain resource, and at least one symbol in any time window in the first time window subset does not belong to the first time domain resource.

As one embodiment, the second node simultaneously receives and sends wireless signals in at least one symbol in the first time domain resource; each time window in the second time window subset belongs to the first time domain resource, and each time window in the first time window subset and the first time domain resource are orthogonal to each other.

As one embodiment, the first information block is used for determining a second time domain resource, and the second time-frequency resource and the first time-frequency resource are orthogonal to each other; the second node simultaneously receives and sends wireless signals in at least one symbol in the first time domain resource, and the second node only receives wireles s signals or only sends wireless signals in any symbol in the second time domain resource; at least one symbol in any time window in the first time window subset belongs to the second time domain resource, and at least one symbol in any time window in the second time window subset does not belong to the second time domain resource.

As one sub-embodiment of the above-mentioned embodiments, each time window in the first time window subset belongs to the second time domain resource, and any time window in the second time window subset and the second time domain resource are orthogonal to each other.

As one embodiment, the second transmitter 1301 comprises at least one of {an antenna 420, a transmitting device 418, a transmitting processor 416, a multi-antenna transmitting processor 471, a controller/processor 475, and a memory 476} in Embodiment 4.

As one embodiment, the second receiver 1302 comprises at least one of {an antenna 420, a receiving device 418, a receiving processor 470, a multi-antenna receiving processor 472, a controller/processor 475, a memory 476} in Embodiment 4.

Those skilled in the art will appreciate that all or some of the steps in the above-mentioned method may be implemented by instructing relevant hardware by a program, where the program can be stored in a computer-readable storage medium, such as a read-only memory, a hard disk or an optical disk. Optionally, all or some of the steps of the above-mentioned embodiments may also be implemented using one or more integrated circuits. Correspondingly, each module unit in the above-mentioned embodiment can be implemented either in a hardware form or as software functional modules. The present application is not limited to any specific combination form of hardware and software. The user equipment, terminals and UEs in the present application comprise but are not limited to: drones, communication modules on drones, remote-controlled aircrafts, aircrafts, small aircrafts, mobile phones, tablet computers, notebooks, in-vehicle communication devices, transportation tools, vehicles, RSUs, wireless sensors, internet cards, Internet of Things terminals, RFID (Radio Frequency Identification) terminals, NB-IoT (Narrow Band Internet of Things) terminals, MTC (Machine Type Communication) terminals, eMTC (enhanced MTC) terminals, data cards, internet cards, in-vehicle communication devices, low-cost mobile phones, low-cost tablet computers, and other wireless communication devices. The base station or system equipment in the present application includes but is not limited to: macro base stations, micro base stations, small base stations, home base stations, relay base stations, eNB (evolved Node B), gNB, TRP, GNSS (Global Navigation Satellite System), relay satellites, satellite base stations, airborne base stations, RSU, drones, testing devices, such as transceiver apparatuses or signaling test instruments that simulate partial base station functions, and other wireless communication devices.

Those skilled in the art will appreciate that the present invention may be practiced in other designated forms without departing from its core or basic features. Therefore, the currently disclosed embodiments should be regarded as descriptive and not restrictive in any way. The scope of the invention is determined by the appended claims rather than the foregoing description, and all modifications within their equivalent meaning and area are considered to have been included therein.

**Claims**

1. A first node used for wireless communication, comprising:

    a first receiver for receiving a first information block and first signaling, wherein the first information block is used for determining a first time-domain resource, and the first signaling is used for determining a first time window set, the first time window set comprising K time windows, and K being a positive integer greater than 1; and

    a first transmitter for respectively sending K signals in the K time windows, wherein each of the K signals carries a TB, a first signal among the K signals carries a first bit block, and the first bit block comprises UCI; the K time windows are divided into a first time window subset and a second time window subset, and each time window in the second time window subset overlaps with the first time-domain resource; and a signal, which is only sent in the first time window subset, among the K signals is used for carrying the first bit block.

2. The first node according to claim 1, wherein the first information block configures symbols in the first time-domain resource as a first type.

3. The first node according to claim 1 or 2, wherein the first bit block comprises first CSI, and the first signaling is used for triggering the first CSI.

4. The first node according to claim 1 or 2, wherein the first receiver receives second signaling, wherein the second signaling is used for determining the first bit block and a reference time window, and the reference time window overlaps with each time window in the K time windows.

5. The first node according to claim 4, wherein the second signaling is used for determining configuration information of a second signal, and the second signal is used for determining the first bit block.

6. The first node according to any one of claims 1 to 5, wherein the first signal is sent in a first time window of the K time windows, and a position of the first time window in the first time window subset is default.

7. The first node according to any one of claims 1 to 6, wherein a position of the first time window in the first time window subset depends on whether the K signals correspond to a same HARQ process number.

8. A second node used for wireless communication, comprising:

    a second transmitter for sending a first information block and first signaling, wherein the first information block is used for determining a first time-domain resource, and the first signaling is used for determining a first time window set, the first time window set comprising K time windows, and K being a positive integer greater than 1; and

a second receiver for respectively receiving K signals in the K time windows,

wherein each of the K signals carries a TB, a first signal among the K signals carries a first bit block, and the first bit block comprises UCI; the K time windows are divided into a first time window subset and a second time window subset, and each time window in the second time window subset overlaps with the first time-domain resource; and a signal, which is only sent in the first time window subset, among the K signals is used for carrying the first bit block.

9. The second node according to claim 8, wherein the first information block configures symbols in the first time-domain resource as a first type.

10. The second node according to claim 8 or 9, wherein the first bit block comprises first CSI, and the first signaling is used for triggering the first CSI.

11. The second node according to claim 8 or 9, wherein the second transmitter sends second signaling, wherein the second signaling is used for determining the first bit block and a reference time window, and the reference time window overlaps with each time window in the K time windows.

12. The second node according to claim 11, wherein the second signaling is used for determining configuration information of a second signal, and the second signal is used for determining the first bit block.

13. The second node according to any one of claims 8 to 12, wherein the first signal is sent in a first time window of the K time windows, and a position of the first time window in the first time window subset is default.

14. The second node according to any one of claims 8 to 13, wherein a position of the first time window in the first time window subset depends on whether the K signals correspond to a same HARQ process number.

15. A method used in a first node for wireless communication, comprising:

receiving a first information block and first signaling, wherein the first information block is used for determining a first time-domain resource, and the first signaling is used for determining a first time window set, the first time window set comprising K time windows, and K being a positive integer greater than 1; and respectively sending K signals in the K time windows, wherein each of the K signals carries a TB, a first signal among the K signals carries a first bit block, and the first bit block comprises UCI; the K time windows are divided into a first time window subset and a second time window subset, and each time window in the second time window subset overlaps with the first time-domain resource; and a signal, which is only sent in the first time window subset, among the K signals is used for carrying the first bit block.

16. The method according to claim 15, wherein the first information block configures symbols in the first time-domain resource as a first type.

17. The method according to claim 15 or 16, wherein the first bit block comprises first CSI, and the first signaling is used for triggering the first CSI.

18. The method according to claim 15 or 16, comprising:

receiving second signaling, wherein the second signaling is used for determining the first bit block and a reference time window, and the reference time window overlaps with each time window in the K time windows.

19. The method according to claim 18, wherein the second signaling is used for determining configuration information of a second signal, and the second signal is used for determining the first bit block.

20. The method according to any one of claims 15 to 19, wherein the first signal is sent in a first time window of the K time windows, and a position of the first time window in the first time window subset is default.

21. The method according to any one of claims 15 to 20, wherein a position of the first time window in the first time window subset depends on whether the K signals correspond to a same HARQ process number.

22. A method used in a second node for wireless communication, comprising:

sending a first information block and first signaling, wherein the first information block is used for determining a first time-domain resource, and the first signaling is used for determining a first time window set, the first time window set comprising K time windows, and K being a positive integer greater than 1; and respectively receiving K signals in the K time windows, wherein each of the K signals carries a TB, a first signal among the K signals carries a first bit block, and the first bit block comprises UCI; the K time windows are divided into a first time window subset and a second time window subset, and each time window in the second time window subset overlaps with the first time-domain resource; and a signal, which is only sent in the first time window subset, among the K signals is used for carrying the first bit block.

23. The method according to claim 22, wherein the first information block configures symbols in the first time-domain resource as a first type.

24. The method according to claim 22 or 23, wherein the first bit block comprises first CSI, and the first signaling is used for triggering the first CSI.

25. The method according to claim 22 or 23, comprising:

   sending second signaling,
   wherein the second signaling is used for determining the first bit block and a reference time window, and the reference time window overlaps with each time window in the K time windows.

26. The method according to claim 25, wherein the second signaling is used for determining configuration information of a second signal, and the second signal is used for determining the first bit block.

27. The method according to any one of claims 22 to 26, wherein the first signal is sent in a first time window of the K time windows, and a position of the first time window in the first time window subset is default.

28. The method according to any one of claims 22 to 27, wherein a position of the first time window in the first time window subset depends on whether the K signals correspond to a same HARQ process number.

FIG. 1

FIG. 2

FIG. 3

First communication device
410

Second communication device
450

416    471    418    420    452    454    457    468

Transmitting processor — Multi-antenna transmitting processor — | Transmitting device / Receiving device | ↔ ↔ | Transmitting device / Receiving device | — Multi-antenna transmitting processor — Transmitting processor

476    475    460

Memory ↔ Controller/ processor    Controller/ processor ↔ Memory

Data source

420    452    459    467

Receiving processor — Multi-antenna receiving processor — | Transmitting device / Receiving device | ↔ | Transmitting device / Receiving device | — Multi-antenna receiving processor — Receiving processor

470    472    418    454    458    456

FIG. 4

| | |
|---|---|
| N2. Second node | U1. First node |

S520. Send a first information block

———————— First information block ————————→

S510. Receive the first information block

S521. Send first signaling

———————— First signaling ————————→

S511. Receive the first signaling

S5200. Send second signaling

———————— Second signaling ————————→

**F50**
Optional

S5100. Receive the second signaling

S5201. Send a second signal

———————— Second signal ————————→

**F51**
Optional

S5101. Receive the second signal

S512. Send K signals in K time windows

←———————— K signals ————————

S522. Receive K signals in K time windows

**F52**
Optional

S5102. Send (K0-K) signals in (K0-K) time windows respectively

←———————— (K0-K) signals ————————

S5202. Receive (K0-K) signals in (K0-K) time windows respectively

( End )        ( End )

FIG. 5

First information block $\xrightarrow{\text{Configure}}$ A symbol in a first time domain resource as a first type

FIG. 6

First information block $\xrightarrow[\text{determining}]{\text{Be used for}}$ Second time domain resources

FIG. 7

First signaling

Trigger ↓

First bit block $\xrightarrow{\text{Include}}$ First CSI

FIG. 8

Second signaling $\xrightarrow{\substack{\text{Be used for} \\ \text{determining}}}$ Configuration information of the second signal

Second signal $\xrightarrow{\substack{\text{Be used for} \\ \text{determining}}}$ First bit block

FIG. 9

Time Window #1

⋮

First time window $\xrightarrow{\text{Send}}$ First signal

⋮

Time Window#K

FIG. 10

Position of the first time window in the first time window $\xrightarrow{\text{Depend on}}$ Whether K signals correspond to the same HARQ process number

FIG. 11

First node
1200

First receiver
1201

First transmitter
1202

FIG. 12

Second node
1300

Second transmitter
1301

Second receiver
1302

FIG. 13

## INTERNATIONAL SEARCH REPORT

| International application No. |
|---|
| **PCT/CN2023/112782** |

| A. | CLASSIFICATION OF SUBJECT MATTER |
|---|---|

H04W 72/21(2023.01)i

According to International Patent Classification (IPC) or to both national classification and IPC

| B. | FIELDS SEARCHED |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; 3GPP: 上海朗帛, 吴克颖, 王平, 张晓博, SHANGHAI LANGBO, Wu Keying, Wang Ping, Zhang Xiaobo, 无线通信, 节点, 接收, 信息块, 时域资源, 时间窗, 集合, 子集, 交叠, 重叠, 发送, 传输块, 比特块, 子带非重叠全双工, time domain, window, TB, set, subset, overlaping, SBFD, CSI, HARQ, UCI

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 114006681 A (SHANGHAI LANGBO COMMUNICATION TECHNOLOGY CO., LTD.) 01 February 2022 (2022-02-01) description, paragraphs [0060]-[0095] and [0223]-[0253], and figures 1-11 | 1-28 |
| A | CN 113597014 A (SHANGHAI LANGBO COMMUNICATION TECHNOLOGY CO., LTD.) 02 November 2021 (2021-11-02) entire document | 1-28 |
| A | CN 113709889 A (SHANGHAI LANGBO COMMUNICATION TECHNOLOGY CO., LTD.) 26 November 2021 (2021-11-26) entire document | 1-28 |
| A | CN 114245475 A (SHANGHAI LANGBIRCH COMMUNICATION TECHNOLOGY CO., LTD.) 25 March 2022 (2022-03-25) entire document | 1-28 |
| A | CN 114554613 A (SHANGHAI LANGBO COMMUNICATION TECHNOLOGY CO., LTD.) 27 May 2022 (2022-05-27) entire document | 1-28 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 November 2023** | **21 November 2023** |

| Name and mailing address of the ISA/CN | Authorized officer |
|---|---|
| **China National Intellectual Property Administration (ISA/CN) China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/112782**

| Patent document cited in search report | | | Publication date (day/month/year) | Patent family member(s) | Publication date (day/month/year) |
|---|---|---|---|---|---|
| CN | 114006681 | A | 01 February 2022 | None | |
| CN | 113597014 | A | 02 November 2021 | None | |
| CN | 113709889 | A | 26 November 2021 | None | |
| CN | 114245475 | A | 25 March 2022 | None | |
| CN | 114554613 | A | 27 May 2022 | None | |

Form PCT/ISA/210 (patent family annex) (July 2022)